(19) Europäisches Patentamt / European Patent Office / Office européen des brevets

(11) **EP 2 709 293 A1**

(12) **EUROPEAN PATENT APPLICATION**
published in accordance with Art. 153(4) EPC

(43) Date of publication:
**19.03.2014 Bulletin 2014/12**

(51) Int Cl.:
*H04B 10/04* (0000.00)   *G02F 1/03* (2006.01)
*G02F 1/035* (2006.01)   *H04B 10/06* (0000.00)
*H04B 10/14* (0000.00)   *H04B 10/142* (0000.00)
*H04B 10/152* (0000.00)   *H04B 10/26* (0000.00)
*H04B 10/28* (0000.00)

(21) Application number: **12786296.9**

(22) Date of filing: **06.04.2012**

(86) International application number:
**PCT/JP2012/002440**

(87) International publication number:
**WO 2012/157182 (22.11.2012 Gazette 2012/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2011 JP 2011108173**

(71) Applicant: **NEC Corporation
Tokyo 108-8001 (JP)**

(72) Inventor: **YAMASE, Tomoyuki
Tokyo 108-8001 (JP)**

(74) Representative: **Vossius & Partner
Siebertstrasse 4
81675 München (DE)**

(54) **SYNCHRONOUS SIGNAL TRANSMISSION SYSTEM, SYNCHRONOUS DRIVE SYSTEM FOR OPTICAL MODULATOR, SYNCHRONOUS SIGNAL TRANSMISSION METHOD, AND NON-TEMPORARY COMPUTER-READABLE MEDIUM STORING PROGRAM THEREFOR**

(57) Provided are a signal synchronization transmission system, a synchronization drive system for optical modulator, a signal synchronization transmission method, and a program thereof, in which phase synchronization may be established with a high degree of accuracy. The present invention includes optical phase modulation circuits (26A, 26B) as one and another transmission processing devices that transmit a plurality of pieces of data in a phase-synchronous manner, and one and another synchronization drive means (33A, 33B) for synchronously control transmission operations of the optical phase modulation circuits. The synchronization drive means (33A, 33B) respectively include phase interpolation circuits (42, 72) that externally receive reference clocks that set operation timings of the optical phase modulation circuits (26A, 26B) through predetermined paths set in advance, and perform phase interpolation processing on the reference clocks to generate synchronization setting clocks, and synchronization setting circuits (60, 76) that set the synchronization setting clocks that are generated as timing clocks, and based on the timing clocks, synchronously set timings of data transmission operations of the optical phase modulation circuits (26A, 26B) together with transmission data signals.

Fig. 1

EP 2 709 293 A1

**Description**

**Technical Field**

The present invention relates to a signal synchronization transmission system, a synchronization drive system for optical modulator, a signal synchronization transmission method, and a program thereof, and more particularly, to a synchronization drive system for optical modulator, a signal synchronization transmission method, and a non-transitory computer readable medium storing program thereof capable of synchronously transmitting a plurality of pieces of data efficiently between one and the other transmission processing devices that transmit the plurality of pieces of data in a phase-synchronous manner.

**Background Art**

In recent years, a broadband multimedia communication service such as an internet connection service or a video delivery service has been provided to users, and there is an explosive increase in demands for these services. In accordance therewith, a dense optical fiber communication system, which is suitable for a long-distance communication and large-capacity information transmission and is highly reliable, has been introduced rapidly in trunk line communication systems that connect large cities by optical fiber transmission lines and metropolitan area communication systems that connect cities by optical fiber transmission lines. In access network communication systems as well, an optical fiber access service spreads rapidly.

In such an optical fiber communication system, a wave length division multiplexing (WDM) technique, which multiplexes optical signals having different wavelengths and transmits the multiplexed optical signals, is widely used in terms of cost reduction for laying optical fibers and improvement of spectral efficiency per optical fiber. It is expected that the broadband multimedia communication service will further be developed, and in order to deal with this, an improvement in a transmission rate (data rate) of the optical fiber communication system is further desired.

One method to increase the data rate is to increase a symbol rate (modulation rate). The simple increase in the symbol rate causes a problem, however, that wavelength dispersion tolerance of the optical transmission line greatly reduces since an allowable residual dispersion amount in optical fibers is inversely proportional to the square of the symbol rate. Further, it is necessary to increase a speed of electrical signal processing, which causes problems that costs of analog electrical parts and the difficulty of development increase. It is therefore not easy to achieve a symbol rate which exceeds 40 [GHz], which is currently becoming the mainstream, in terms of the performance of devices or the like that form the optical fiber communication system.

In order to deal with these problems, large capacity of the optical fiber communication system has been achieved by a multi-level configuration, which increases a bit number per symbol. Known examples of a method of achieving the multi-level configuration include, for example, a quadrature phase shift keying (QPSK) method of assigning two bits to each symbol and a quadrature amplitude modulation (16 QAM) method of assigning four bits to each symbol.

In order to achieve such a multi-level modulation, an optical modulator is used, for example, which is capable of independently generating orthogonal optical electric field components (I signal and Q signal). This optical modulator has a structure in which two Mach-Zehnder (MZ) phase modulators are connected in parallel, thereby being able to introduce two signal lights to the respective Mach-Zehnder phase modulators to modulate these signal lights by the QPSK method (see Patent literature 1).

It is also proposed to achieve multi-level modulation using a dual drive Mach-Zehnder modulator (DDMZM) including two electrodes that drive a phase modulator (see Patent literature 2). Since the dual drive Mach-Zehnder modulator is an optical component that is widely used in normal optical transceivers as a push-pull optical modulator, cost reduction may be achieved.

In any method, it is important that a control circuit that controls an operation of a modulator includes different drive circuits that generate two drive signals to drive the modulator, adjusts a timing skew between these drive circuits, and synchronizes operations of the respective drive circuits.

Further, another technique is provided to skew-balance two differential data signals (I signal and Q signal) to drive a push-pull optical modulator. According to this technique, an attenuator that attenuates clock signals that are recovered in drive circuits and an attenuator that attenuates clock signals input to a recovery circuit that performs timing recovery are provided, elements having the same configuration are used for these attenuators, and delay times for the clock signals are the same (see Patent literature 3).

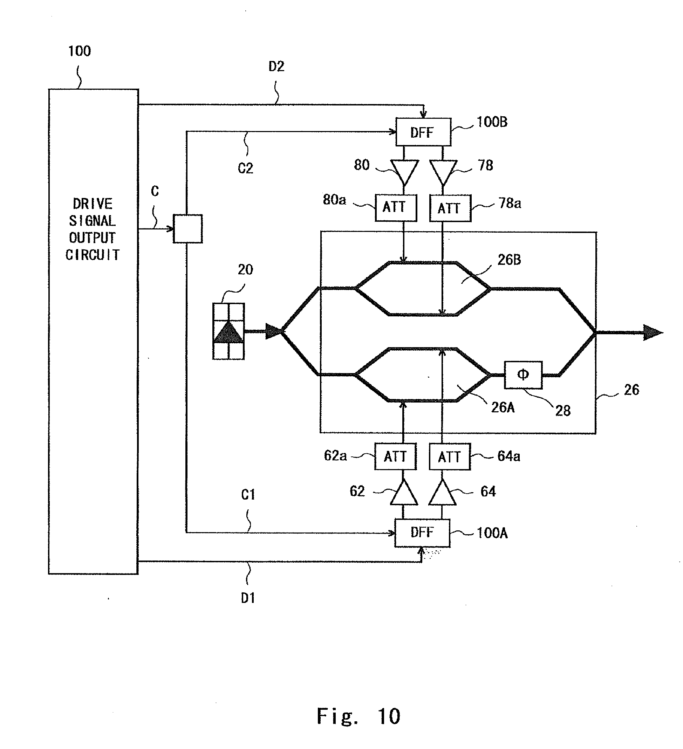

Fig. 10 shows one example. In Fig. 10, a drive signal output circuit 100 is configured to output data signals for modulation D1 and D2 and a reference clock (synchronization signal) C to modulationdrive a differential phase shift keying (DPSK) optical modulator 26 that includes two optical phase modulation circuits 26A and 26B. The reference clock C is divided into reference clocks C1 and C2 and the reference clocks C1 and C2 are transmitted, whereby timings at which recovery drive circuits 100A and 100B respectively installed corresponding to the optical phase modulation circuits 26A and 26B are driven are separately set in a synchronous manner.

D-type flip-flop circuits are used as the recovery drive circuits 100A and 100B. The recovery drive circuits 100A and 100B recover and output two drive signals at timings of the reference signal clocks C1 and C2, and the two drive signals that are recovered modulate-drive the phase modulators 26A and 26B. The symbol 28 indicates a phase shifter, the symbols 62 and 64 indicate driver circuits for the phase modulator 26a, the symbols 78 and 80 indicate driver circuits for the phase modulator 26b, and the symbols 62a, 64a, 78a, and 80a indicate attenuators for amplitude adjustment.

### Citation List

### Patent Literature

**Patent literature 1:** Published Japanese Translation of PCT International Publication for Patent Application, No. 2004-516743
**Patent literature 2:** Japanese Unexamined Patent Application Publication No. 2010-166476
**Patent literature 3:** Domestic Re-publication of PCT International Publication for Patent Application, No.WO2007/088636

### Summary of Invention

### Technical Problem

However, in the recovery drive circuits for optical modulator disclosed in the aforementioned Patent literature 3, it is required in practical to mount the plurality of independent drive circuits on a module or a circuit board. When a lithium niobate (LiNbO 3: LN) waveguide modulator is driven, for example, the size of the modulator may as large as several centimeters. It is therefore difficult to control the modulator by an integrated circuit (LSI) that includes a single drive circuit. This requires that independent different integrated circuits are mounted in proximity to the modulator.

In summary, it is necessary to supply timing clocks output from the clock generation circuit to the two independent integrated circuits through transmission lines having a length of several centimeters. In such a case, the timing clocks generated by the clock generation circuit are supplied to the respective integrated circuits through the transmission lines divided into two parts. There is a problem, however, that timings at which the timing clocks divided into two systems are input to the respective integrated circuits are deviated due to the slight difference in the lengths of the transmission lines that are divided, which generates timing skews. Even when the wiring distances from the clock generation circuit to each integrated circuit are designed to be equal to each other, it is sufficiently considered that the lengths of the transmission lines are different because of manufacturing variations of the circuit boards.

Specifically, the difference in the lengths of the transmission lines of two systems causes timing skews in timing clocks that serve as references when generating drive signals to drive a modulator. When drive signals are generated from the timing clocks where such timing skews occur, the intensities of optical signals (I signal and Q signal) become unbalanced in an optical modulator, and the accuracy of the phase modulation signal obtained by optically combining the I signal and the Q signal is dramatically degraded. The degradation in the accuracy of the phase modulation signal significantly increases the possibility that the phase of the optical signal is falsely detected in a receiver side that receives the optical signal that is transmitted, which degrades a communication quality.

The aforementioned Patent literature 3 proposes the following technique. According to the technique, an optical signal output from a DKPSK optical modulator is monitored by a sampling oscilloscope, and an attenuation amount of a variable attenuator and a phase shift amount of a variable phase shifter are adjusted while checking the waveform of the optical signal, thereby determining the attenuation amount of the attenuator and the phase shift amount of the phase shifter that should be used in an actual device. The attenuator with the attenuation amount that is determined and the phase shifter with the phase shift amount that is determined are used in the actual device, thereby increasing the accuracy of the optical signal output from the optical modulator. However, the feedback using the sampling oscilloscope is a difficult operation in practice.

The present invention has been made in order to solve the problems in the related arts, and aims to provide a signal synchronization transmission system, a synchronization drive system for optical modulator, a signal synchronization transmission method, and a non-transitory computer readable medium storing program thereof that are capable of establishing phase synchronization by a plurality of circuits with high accuracy.

Solution to Problem

In order to achieve the aforementioned exemplary object, the signal synchronization transmission system according to the present invention includes one and another transmission processing devices that transmit a plurality of pieces of data in a phase-synchronous manner and one and another synchronization drive means that synchronously control transmission operations of the respective transmission processing devices.

The one and the other synchronization drive means include phase interpolation circuits that externally receive reference clocks for setting operation timings of the transmission processing devices through one and another paths that are set in advance, and perform phase interpolation processing on the reference clocks to generate synchronization setting clocks; and synchronization setting circuits that receive the synchronization setting clocks as timing clocks, and based on the timing clocks, synchronously set timings of data transmission operations of the corresponding transmission processing devices through transmission data signals separately input.

Further, the synchronization drive means each transmit the reference clock that is received to the other synchronization drive means as a transfer clock through a transfer path that is set in advance.

The phase interpolation circuits each include functions of calculating, when generating the synchronization setting clock by the phase interpolation processing, an intermediate phase which is a center of a phase difference between the reference clock and the transfer clock transmitted from the other synchronization drive means to generate the synchronization setting clock based on the intermediate phase.

Further, in order to achieve the exemplary object above, a synchronization drive system for optical modulator according to the present invention includes one and another synchronization drive means that synchronously control transmission operations of one and another optical modulators that transmit a plurality of pieces of data in a phase-synchronous manner.

The one and the other synchronization drive means include: phase interpolation circuits that externally receive reference clocks for setting operation timings of the optical modulators through one and another paths that are set in advance, and perform phase interpolation processing on the reference clocks to generate synchronization setting clocks, and synchronization setting circuits that receive the synchronization setting clocks that are generated as timing clocks and based on the timing clocks, synchronously set timings of data transmission operations in the corresponding optical modulators through transmission data signals separately input.

Further, the synchronization drive means each include a function of transmitting the reference clock that is received to the other synchronization drive means as a transfer clock through a transfer path that is set in advance.

The phase interpolation circuits each include functions of calculating, when generating the synchronization setting signal by the phase interpolation processing, an intermediate phase which is a center of a phase difference between the reference clock and the transfer clock transmitted from the other synchronization drive means to generate the synchronization setting clock based on the intermediate phase.

Furthermore, in order to achieve the aforementioned exemplary object, a signal synchronization transmission method according to the present invention is a signal synchronization transmission system including one and another transmission processing devices that transmit a plurality of pieces of data in a phase-synchronous manner and one and another synchronization drive means that synchronously control transmission operations of the respective transmission processing devices, and includes:

externally receiving, by the one and the other synchronization drive means, reference clocks for setting operation timings of the transmission processing devices through one and another paths that are set in advance;

performing phase interpolation processing, by phase interpolation circuits included in the synchronization drive means, on the reference clocks that are input, to generate synchronization setting clocks;

receiving the synchronization setting clocks that are generated as timing clocks and based on the timing clocks, synchronously setting timings of data transmission operations of the corresponding transmission processing devices, and when synchronously setting the timings, transmitting transmission data signals that are externally input for each of the corresponding transmission processing devices as device drive signals at timings of the transmission operations, these operation procedures being executed by the synchronization setting circuits of the synchronization drive means;

prior to generation of the synchronization setting clocks generated by the phase interpolation circuits,

executing, by each of the synchronization drive means, transfer of the reference clock to mutually transmit the reference clock received by the synchronization drive means to the other synchronization drive means through a transfer path that is set in advance as a transfer clock; and

in the phase interpolation processing executed when the synchronization setting clocks are generated, calculating, by each of the phase interpolation circuits, an intermediate phase which is a center of a phase difference between the reference clock and the transfer clock transmitted from the other synchronization drive means, and generating, by each of the phase interpolation circuits, the synchronization setting clock based on the intermediate phase.

Furthermore, in order to achieve the aforementioned exemplary object, a non-transitory computer readable medium storing a signal synchronization transmission program according to the present invention is a signal synchronization transmission system including one and another transmission processing devices that transmit a plurality of pieces of data in a phase-synchronous manner and one and another synchronization drive means that synchronously control transmission operations of the respective transmission processing devices, and includes:

a reference clock input processing function that externally receives reference clocks for setting operation timings of the transmission processing devices for each transmission processing device through one and another paths that are set in advance, to hold the reference clocks by the one and the other synchronization drive means,

a synchronization setting clock generation processing function that performs phase interpolation processing on the reference clocks that are input, generates synchronization setting clocks for the transmission processing devices for each corresponding transmission processing device, and holds the synchronization setting clocks by the one and the other synchronization drive means, and

a data signal synchronization setting processing function that specifies the synchronization setting clocks that are generated as timing clocks, and based on the timing clocks, synchronously sets timings of data transmission operations of the corresponding transmission processing devices and separately transmits transmission data signals that are externally input separately to the corresponding transmission processing devices as device drive signals at timings of the data transmission operations.

Furthermore, the aforementioned timing clock generation processing function further includes a reference clock transfer processing function that mutually transmits the reference clocks separately received in advance through the one and the other paths to the other transmission processing device as transfer clocks through a transfer path that is set in advance.

The aforementioned synchronization setting clock generation processing function includes calculating, in the phase interpolation processing performed when the synchronization setting clock generation processing function is performed, an intermediate phase which is a center of a phase difference between the reference clock and the transfer clock transmitted from the other transmission processing device, and generating the synchronization setting clock based on the intermediate phase.

The processing functions are achieved by computers included in the one and the other synchronization drive means in a synchronous manner.

**Advantageous Effects of Invention**

According to the techniques of the present invention, it is possible to provide a signal synchronization transmission system, a synchronization drive system for optical modulator, a signal synchronization transmission method, and a non-transitory computer readable medium storing program thereof with high quality that are able to synchronously transmit a plurality of data signals with high accuracy even when one and another synchronization drive means are used, and when applied to one and another optical phase modulation circuits, able to generate modulation optical signals with high accuracy and to synchronize operation timings with high accuracy.

**Brief Description of Drawings**

Fig. 1 is a block diagram showing a case in which a signal synchronization transmission system according to a first exemplary embodiment of the present invention is executed for a multi-valued optical modulator;

Fig. 2 is a block diagram showing a schematic configuration of an optical communication system that connects an optical transmitter including the signal synchronization transmission system disclosed in Fig. 1 and a receiving-side optical communication apparatus;

Fig. 3 is a block diagram showing one example of a phase interpolation circuit in the signal synchronization transmission system shown in Fig. 1;

Fig. 4 is a diagram showing an operation of the phase interpolation circuit shown in Fig. 3 and is an explanatory diagram showing an example of phase interpolation waveforms;

Fig. 5 is a block diagram showing one example of a phase synchronization circuit in the signal synchronization transmission system shown in Fig. 1;

Fig. 6 is a flowchart (former part) showing an operation of the optical transmitter including the signal synchronization transmission system according to the first exemplary embodiment shown in Fig. 1;

Fig. 7 is a flowchart (latter part) showing an operation of the optical transmitter including the signal synchronization transmission system according to the first exemplary embodiment shown in Fig. 1;
Fig. 8 is a block diagram showing a second exemplary embodiment of a signal synchronization transmission system according to the present invention;
Fig. 9 is a block diagram showing the second exemplary embodiment of the signal synchronization transmission system according to the present invention; and
Fig. 10 is a block diagram showing an example of a related technique of the signal synchronization transmission system according to the present invention.

**Description of Embodiments**

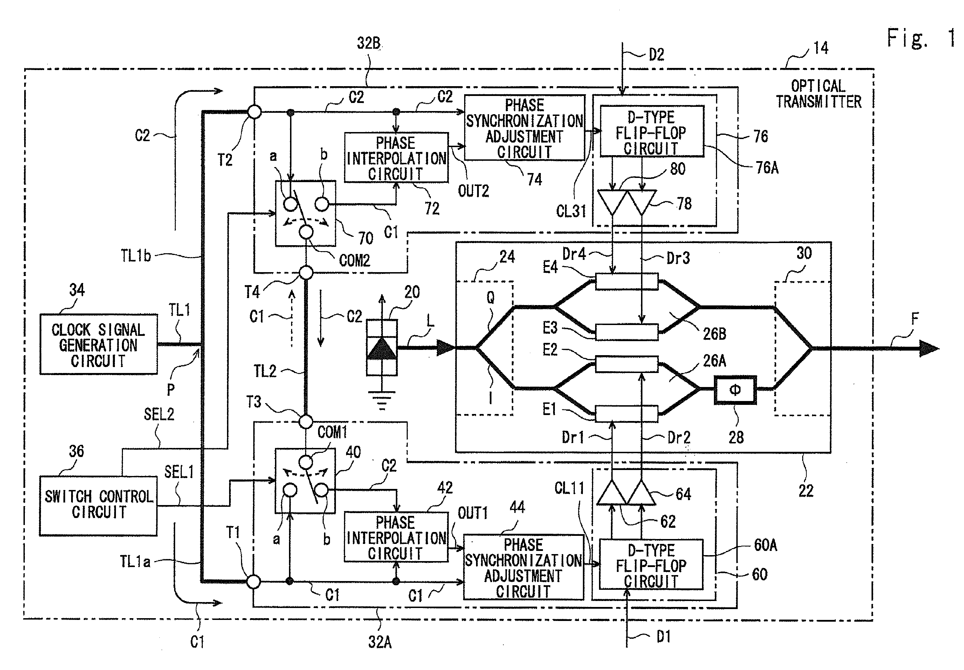

Hereinafter, with reference to Figs. 1 to 6, an example in which a signal synchronization transmission system according to the present invention is executed for a multi-valued optical modulator (first exemplary embodiment) will be described.

[First exemplary embodiment]

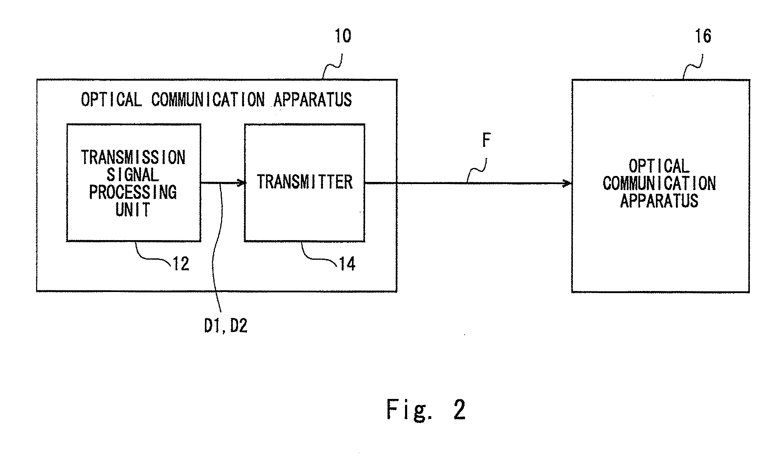

In Fig. 2, an optical transmitter 14 equipped with a signal synchronization transmission system according to the present invention forms a part of an optical communication apparatus 10 together with a transmission signal processing unit 12 that processes transmission data to be transmitted to a communication partner.

This optical communication apparatus 10 converts a main signal output from the transmission signal processing unit 12 into an optical signal by the optical transmitter 14, and transmits the optical signal that is obtained to another optical communication apparatus through an optical fiber F. A receiving-side optical communication apparatus 16 is connected to the optical fiber F as a communication partner. The optical communication apparatus 16 modulates the optical signal received through the optical fiber F into an electrical signal to recover the main signal, and forms an optical communication system together with the transmitting-side optical communication apparatus 10.

The transmission signal processing unit 12 converts a transmission data sequence into main signals of two systems (I signal of I component and Q signal of Q component), and outputs the main signals as data signals D1 and D2 for driving a modulator. The main signals D1 and D2 are transmitted to the optical transmitter 14 to drive the modulator.

The optical transmitter 14 intensity modulates a laser beam emitted from a light source according to the main data signals D1 and D2 supplied from the transmission signal processing unit 12, combines the modulated optical signals, and emits the combined output beam to the optical fiber F.

Fig. 1 shows an internal configuration example of the optical transmitter 14 equipped with the signal synchronization transmission system according to the present invention.

A basic configuration of the signal synchronization transmission system that forms the main part of the optical transmitter 14 will be described first, followed by description of the details of the whole optical transmitter 14.

As shown in Fig. 1, the signal synchronization transmission system which is the main part of the optical transmitter 14 includes an optical modulator 22 that includes optical phase modulation circuits 26A and 26B, the optical phase modulation circuits 26A and 26B being one and the other transmission processing devices that transmit a plurality of pieces of data in a phase-synchronous manner, and one and the other synchronization drive units 32A and 32B that synchronously control transmission operations of the optical phase modulation circuits 26A and 26B of the optical modulator 22.

The one and the other synchronization drive units 32A and 32B include phase interpolation circuits 42 and 72 that generate synchronization setting clocks OUT1 and OUT2, optical phase modulation circuits 26A and 26B, and synchronization setting circuits 60 and 76, respectively.

The phase interpolation circuits 42 and 72 externally receive reference clock signals C1 and C2 for setting operation timings of the optical phase modulation circuits 26A and 26B from a common clock signal generation circuit 34 through one and the other paths TL1a and TL1b that are set in advance, and perform phase interpolation processing on the reference clock signals C1 and C2 to generate the synchronization setting clocks OUT1 and OUT2.

The synchronization setting circuits 60 and 76 respectively receive the synchronization setting clocks OUT1 and OUT2 as timing clock signals CL11 and CL31, and based on the timing clock signals CL11 and CL31, synchronously set timings of data transmission operations (optical modulation operations) of the corresponding optical phase modulation circuits 26A and 26B through transmission data signals (main signals) D1 and D2 separately input.

In this case, as shown in Fig. 1, D-type flip-flop circuits are used as the synchronization setting circuits 60 and 76 in the first exemplary embodiment, thereby being able to generate two modulation drive signals Dr1 and Dr2 for the optical phase modulation circuit 26A, and two modulation drive signals Dr3 and Dr4 for the optical phase modulation circuit 26B, and to synchronously drive the optical phase modulation circuits 26A and 26B stated above separately.

The aforementioned synchronization drive units 32A and 32B include a function of transmitting the reference clock signals C1 and C2 that are received to the other synchronization drive units 32B and 32A, respectively, through a transfer path TL2 that is set in advance. This achieves generation of the synchronization setting clocks OUT1 and OUT2 (phase interpolation processing on the reference clock signals C1 and C2) having the same phase difference by the phase interpolation circuits 42 and 72 as stated above.

The synchronization setting clocks OUT1 and OUT2 are generated by the phase interpolation circuits 42 and 72 as described below. Specifically, the phase interpolation circuits 42 and 72 respectively calculate intermediate phases, which are centers of phase differences between the reference clock signals C1 and C2 and transfer clocks C2 and C1 transmitted from the other synchronization drive units 32B and 32A, and the clocks having the same phase difference including the intermediate phases obtained by the calculation are output as the synchronization setting clocks OUT1 and OUT2.

Further, the optical phase modulation circuits 26A and 26B are further set so as to modulate a laser beam L input from a certain common light source based on the data signals for transmission D1 and D2, then combine the modulated laser beams and externally output the combined beam.

Further, the synchronization setting circuits 60 and 76 include functions of operating at timings of the timing clock signals CL11 and CL31 transmitted from the phase interpolation circuits 42 and 72, converts the transmission data signals D1 and D2 into voltage pulses that are drive signals for optical modulator, and transmitting the voltage pulses to the corresponding one or the other optical phase modulation circuit 26A or 26B.

In this way, as will be described, in the phase modulation based on the data signals D1 and D2 corresponding to the optical phase modulation circuits 26A and 26B, the phase modulation operation is executed by the timing clock signals CL11 and CL31 having the same phase at the same timing.

Furthermore, in the synchronization drive units 32A and 32B stated above in the first exemplary embodiment, phase synchronization adjustment circuits 44 and 74 are respectively provided between the phase interpolation circuits 42 and 72 and the synchronization setting circuits 60 and 76 (see Fig. 1).

To specify the timing clock signals CL11 and CL31 stated above, the phase synchronization adjustment circuits 44 and 74 are configured to adjust the phases of the reference clock signals C1 and C2 that are externally input so as to synchronize with the phases of the synchronization setting clocks OUT1 and OUT2 of the intermediate phase output from the phase interpolation circuits 42 and 72, and to transmit the reference clock signals C1 and C2 whose phases are adjusted to the corresponding synchronization setting circuits 60 and 76 as the timing clock signals CL11 and CL31.

The synchronization drive units 32A and 32B are respectively equipped with change-over switches 40 and 70 that transmit the reference clock signals C1 and C2 received by the synchronization drive units 32A and 32B as transfer clocks to the phase interpolation circuits 42 and 72 of the other synchronization drive units 32B and 32A by mutual switch through the transfer path TL2 stated above.

These change-over switches 40 and 70 are set to a state in which they are communicated with each other between the synchronization drive units 32A and 32B through the transfer path TL2 and are wired so as to be able to perform a synchronous switching operation. The change-over switches 40 and 70 include a switch control circuit 36 that simultaneously controls switch of the operations of the change-over switches 40 and 70 at the same timing. This switch control circuit 36 is configured to execute the switch control at the same output timings as the reference clock signals C1 and C2 output from the clock signal generation circuit 34 stated above.

One synchronization setting circuit 60 among the synchronization setting circuits 60 and 76 described above includes a D-type flip-flop circuit 60A that operates in accordance with the timing clock signal CL11, converts the transmission data signal D1 that is externally input into voltage pulses corresponding to an optical phase 0 (zero) and an optical phase $\pi$, and outputs the voltage pulses, and two drivers 62 and 64 that separately apply the respective voltage pulses to each arm of the one phase modulation circuit 26A.

As is similar to one synchronization setting circuit 60 stated above, the other synchronization setting circuit 76 also includes a D-type flip-flop circuit 76A that operates in accordance with the timing clock signal CL31, converts the transmission data signal D2 that is externally input into voltage pulses corresponding to an optical phase 0 (zero) and an optical phase $\pi$, and outputs the voltage pulses, and two drivers 78 and 80 that separately apply the respective voltage pulses to each arm of the other phase modulation circuit 26B.

Accordingly, it is possible to smoothly perform synchronous drive of one optical phase modulation circuit 26A and the other optical phase modulation circuit 26B stated above, to synchronously drive the transmission data signals D1 and D2 with high accuracy so as to be stable as a whole, and to secure the safety of the whole operation of the optical modulator 22.

This will be described further in detail below.

As described above, the optical transmitter 14 includes the optical modulator 22 that intensity modulates a laser beam emitted from a laser diode 20 which is a light source and generates the modulated optical signal. This optical modulator 22 has a configuration in which the two optical phase modulation circuits 26A and 26B are arranged in parallel on a substrate, each of the optical phase modulation circuits 26A and 26B formed of a lithium niobate waveguide (LN waveguide)-type Mach-Zehnder (MZ) phase modulator using an electro-optical effect of lithium niobate (LiNbO 3), for example.

The optical modulator 22 includes a demultiplexer 24 that divides the laser beam L, which is input from the laser diode 20, into arms I and Q (I arm, Q arm) of two waveguides. The demultiplexer 24 is a beam splitter that divides the laser beam L into one arm I and the other arm Q. The optical modulator 22 includes one and the other two optical phase modulation circuits 26A and 26B in which optical waveguides are arranged corresponding to the two arms I and Q as described above, and one optical phase modulation circuit 26A among the optical phase modulation circuits 26A and 26B further includes a phase shifter 28 in the output side of one optical phase modulation circuit 26A.

The optical phase modulation circuits 26A and 26B are Mach-Zehnder phase modulators, as described above, and are configured to perform optical intensity modulation on the incident light by a quadrature phase shift keying (QPSK) method by a push-pull operation according to the drive signals that are the voltage pulses generated in the corresponding one synchronization drive unit 32A and the other synchronization drive unit 32B.

More specifically, one optical phase modulation circuit 26A performs optical intensity modulation of QPSK method on the incident light from the arm I according to the modulation drive signals Dr1 and Dr2 supplied from the corresponding one synchronization drive unit 32A, and the other optical phase modulation circuit 26B performs optical intensity modulation by the QPSK method on the incident light from the arm Q according to the modulation drive signals Dr3 and Dr4 supplied from the other synchronization drive unit 32B.

The phase shifter 28 is arranged in the output side of the one optical phase modulation circuit 26A. This phase shifter 28 is a phase adjustment unit that adds a phase φ to the optical signal that passes through the arm I and adds a phase difference between the optical signals that pass through the arms I and Q. According to an ideal QPSK modulator, the phase φ that is added has a value of π/2.

A multiplexer 30 that combines the optical signals that pass through the phase shifter 28 and the optical modulation circuit 26B is arranged in the output side of the phase shifter 28 and the output side of the other optical phase modulation circuit 26B. This multiplexer 30 functions to emit the optical signal that is combined to the optical fiber F, which is an optical transmission line. Further, electric field setup electrodes E1, E2, E3, and E4 are arranged in the respective arm parts of the optical phase modulation circuits 26A and 26B to cover the arm parts (see Fig. 1).

The electric field setup electrodes E1, E2, E3, and E4 respectively receive the modulation drive signals Dr1, Dr2, Dr3, and Dr4 supplied from the corresponding synchronization drive units 32A and 32B, whereby an electric field for modulation drive is applied to each of the arm I and the arm Q of the optical phase modulation circuits 26A and 26B through the electric field setup electrodes E1, E2, E3, and E4.

The synchronization drive units 32A and 32B are integrated circuits (LSI: large-scale integrated circuit) that function based on the reference clock signals C1 and C2 directly supplied from the clock signal generation circuit 34 through one and the other paths (transmission lines) TL1a and TL1Bb and the reference clock signals C2 and C1 as transfer clocks supplied from the other synchronization drive units 32B and 32A through the transfer path (transmission line) TL2, operate in synchronization with each other, and generate and output the modulation drive signals Dr1, Dr2, Dr3, and Dr4 to modulate-drive the optical phase modulation circuits 26A and 26B of the optical modulator 22 as described above.

One and the other paths (transmission lines) TL1a and TL1b and the aforementioned transfer path TL2 are copper lines that are arranged on a substrate (not shown) that holds the synchronization drive units 32A and 32B. The material of one and the other paths (transmission lines) TL1a and TL1b and TL2 is not limited to copper, but may be other conductors such as gold or aluminum, for example.

The synchronization drive units 32A and 32B include a function of generating the modulation drive signals Dr1, Dr2, Dr3, and Dr4 that modulate-drive the two optical phase modulation circuits 26A and 26B in the optical modulator 22 in a synchronous manner as stated above, based on the reference clock signals C1 and C2 from the clock signal generation circuit 34 transmitted through one and the other paths TL1a and TL1b and the transfer path TL2.

Next, the one synchronization drive unit 32A and the other synchronization drive unit 32B will be described in detail.

First, in one synchronization drive unit 32A, the output of the clock signal generation circuit 34 is connected to an input terminal T1 through one path (transmission line) TL1a, whereby the reference clock signal C1 generated in the clock signal generation circuit 34 is directly input to the synchronization drive unit 32A. This one path (transmission line) TL1a is divided at a branch point P and is also connected to an input terminal T2 of the other synchronization drive unit 32B, whereby the reference clock signal is directly input to the other synchronization drive unit 32B as well.

The branch point P is set in the intermediate position between the input terminal T1 and the input terminal T2 of one synchronization drive unit 32A and the other synchronization drive unit 32B, and a distance Lc1 between the branch point P and the input terminal T1 is set to be identical to a distance Lc2 between the branch point P and the input terminal T2. Further, input/output terminals T3 and T4 arranged between one synchronization drive unit 32A and the other synchronization drive unit 32B are connected to each other through the transfer path TL2 stated above.

The one synchronization drive unit 32A includes the path change-over switch 40 to transmit the reference clock signal C1 directly input to the input terminal T1 to the other synchronization drive unit 32B through the input/output terminal T3 and the transfer path TL2. A contact a of the path change-over switch 40 is connected to the input terminal T1, and a switch terminal COM1 of the path change-over switch 40 is connected to the other input/output terminal T3.

The path change-over switch 40 is a selection circuit that selectively switches the connection to one of the contact a and a contact b in accordance with a selection control signal SEL1 supplied from the switch control circuit 36 to set the clock path.

When the phase adjustment in one synchronization drive unit 32A is performed, the phase adjustment is performed, as described above, using the reference clock signal C1 input to the input terminal T1 and the reference clock signal C2 from the other synchronization drive unit 32B input to the input/output terminal T3. In this case, the path change-over switch 40 is configured to select the input function by switching the connection to the contact b according to the selection control signal SEL1 supplied from the switch control circuit 36, and to receive the reference clock signal C2 that passes through the other synchronization drive unit 32B through the transfer path TL2 and the input/output terminal T3.

In contrast, when the phase adjustment in the other synchronization drive unit 32B is performed, the path change-over switch 40 is configured to select the output function by switching the connection to the contact a according to the selection control signal SEL1, and to supply the reference clock signal C1 that passes through one synchronization drive unit 32A to the input/output terminal T4 of the other synchronization drive unit 32B through the input/output terminal T3 and the transfer path TL2.

The switch control circuit 36 includes a function of generating the selection control signal SEL1 stated above and controlling the selection operation of the path change-over switch 40 included in the synchronization drive unit 32A.

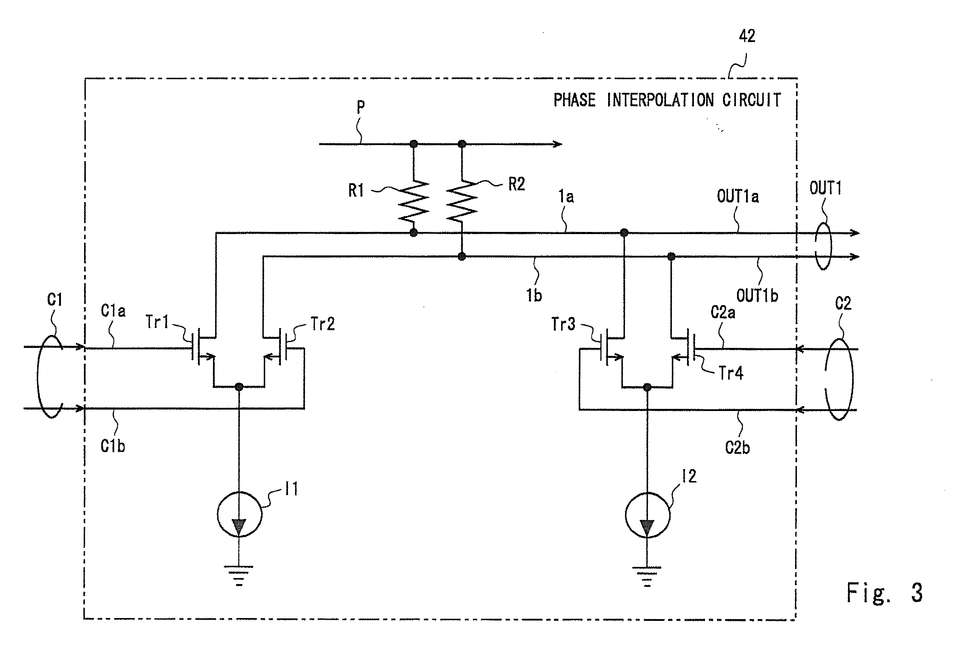

The phase interpolation circuit 42 is connected to the contact b of the path change-over switch 40. This phase interpolation circuit 42 is a circuit that performs phase interpolation as stated above based on the reference clock signal C2 supplied from the side of the path change-over switch 40 and the reference clock signal C1 directly input to the input terminal T1 to generate a clock signal (synchronization setting clock) of the intermediate phase. Fig. 3 shows one example of the configuration of the phase interpolation circuit 42.

In this phase interpolation circuit 42, as shown in Fig. 3, transistor pair Tr1 and Tr2 having gates connected to the input terminal T1 and transistor pair Tr3 and Tr4 having gates connected to the contact b are connected to a power supply line P through resistors R1 and R2, respectively. The drains of the transistor pair Tr1 and Tr2 are connected to each other and are grounded. The symbol I1 indicates a ground current value. The drains of the transistor pair Tr3 and Tr4 are connected to each other and are grounded. The symbol I2 indicates a ground current value.

According to such a configuration, in the phase interpolation circuit 42, a drain current that flows through the transistor Tr1 changes according to a reference clock signal C1a, and a drain current that flows through the transistor Tr3 changes according to a reference clock signal C2a. The change in the drain current in the transistor Tr1 and the change in the drain current in the transistor Tr3 are joined together and added in a connection line 1a where the sources of the transistors Tr1 and Tr3 are connected.

Accordingly, in both ends of the resistor R1 connected to the power supply line P, the amount of voltage drop varies according to the change in the current added in the connection line 1a, thereby generating a clock signal (synchronization setting clock) OUT1a which has the intermediate phase between the reference clock signal C1a and the reference clock signal C2b from the connection line 1a.

In the similar way, a drain current that flows through the transistor Tr2 changes according to a reference clock signal C1b and a drain current that flows through the transistor Tr4 changes according to a reference clock signal C2b. The change in the drain current in the transistor Tr2 and the change in the drain current in the transistor Tr4 are joined together and added in a connection line 1b where the sources of the transistors Tr2 and Tr4 are connected.

Accordingly, in both ends of the resistor R2 connected to the power supply line P, the amount of voltage drop varies according to the change in the current added in the connection line 1b, thereby generating a clock signal (synchronization setting clock) OUT1b which has the intermediate phase between the reference clock signal C1b and the reference clock signal C2a from the connection line 1b.

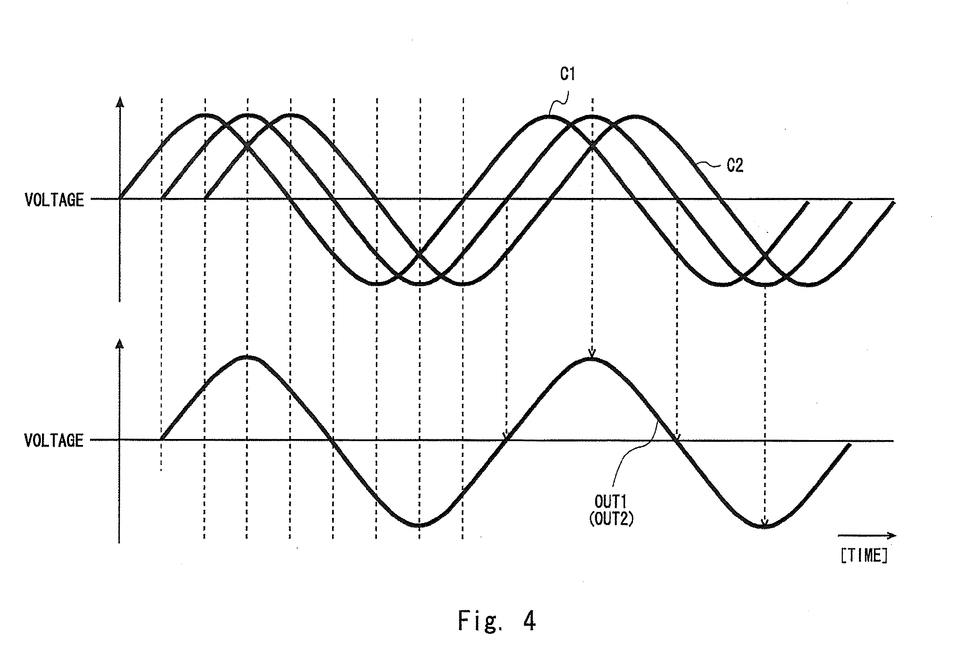

In this case, the phases of the intermediate phase signals OUT1a and OUT1b that are generated indicate the intermediate phase of equal phase value, as shown in the column of expression (1) described later, and the phase interpolation circuit 42 outputs the intermediate phase signal as the clock signal (i.e., synchronization setting clock) OUT1 of the intermediate phase (see Fig. 4).

The phase interpolation circuit 42 further includes a function of supplying the intermediate phase signal thus generated to the phase synchronization adjustment circuit 44 as the synchronization setting clock OUT1.

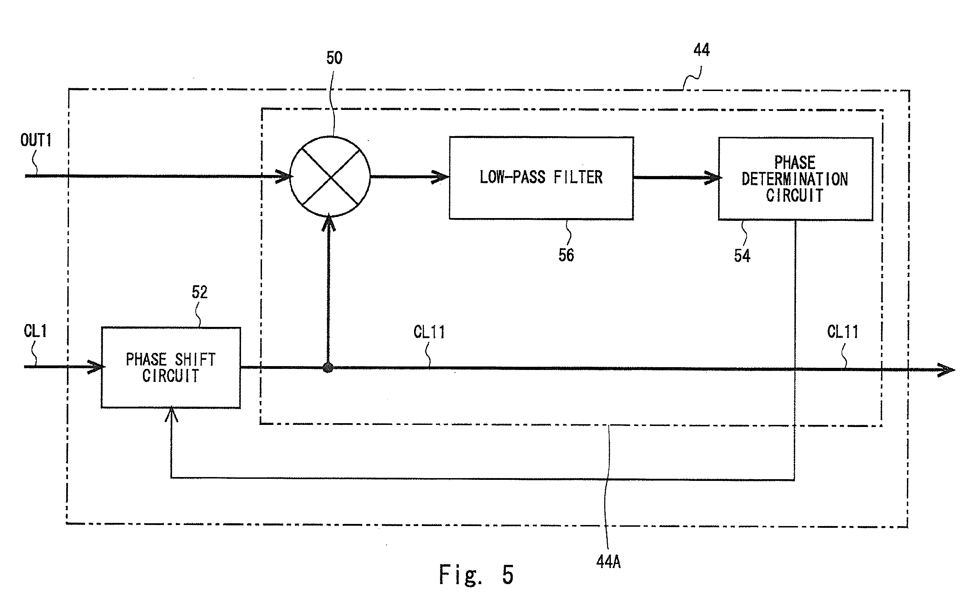

Next, the phase synchronization adjustment circuit 44 will be described. This phase synchronization adjustment circuit 44 adjusts the phase of the reference clock signal C1 directly input to the input terminal T1 so as to synchronize with the phase of the synchronization setting clock (intermediate phase signal) OUT1 output from the phase interpolation circuit 42, and outputs the adjustment result as the timing clock signal of one optical phase modulation circuit 26A. Fig. 5 shows an internal configuration example of the phase synchronization adjustment circuit 44.

This phase synchronization adjustment circuit 44 includes, as shown in Fig. 5, a phase difference detection circuit 44A and a phase shift circuit 52.

The phase difference detection circuit 44A detects a phase difference between the synchronization setting clock (intermediate phase signal) OUT1 output from the phase interpolation circuit 42 and the reference clock signal C1 input through the input terminal T1.

The phase shift circuit 52 includes a delay adjustment function that shifts the phase of the reference clock signal C1 by the phase difference detected by the phase difference detection circuit 44A to output the timing clock signal CL11.

Among them, the phase difference detection circuit 44A includes a mixer circuit 50 that receives the synchronization setting clock (intermediate phase signal) OUT1 and a part of the output signal of the phase shift circuit 52 to perform multiplication processing on them, a low-pass filter 56 that passes a DC component in proportional to the amplitude output from the mixer circuit 50, and a phase determination circuit 54 that determines whether the phases are matched based on the value of the DC component and feedback-controls the phase shift circuit 52 so that the phase difference becomes zero.

The mixer circuit 50 is, as stated above, a calculation circuit that receives the synchronization setting clock (intermediate phase signal) OUT1 and the output of the phase shift circuit 52 (timing clock signal CL1) and multiplies the synchronization setting clock OUT1 by the timing clock signal CL1 to output the DC component in proportional to the amplitude and an AC component with double frequency to the low-pass filter 56 as a multiplication result.

Next, the low-pass filter 56 has a function of removing the AC component from the signal output from the mixer circuit 50 and outputting only the signal with DC component to the phase determination circuit 54. When the phases of the synchronization setting clock OUT1 and the timing clock signal CL1 are matched, the low-pass filter 56 outputs a direct current signal which is in proportion to the signal level. In contrast, when it is an asynchronous signal in which there is a phase difference between the synchronization setting clock (intermediate phase signal) OUT1 and the timing clock signal CL1, the signal output from the low-pass filter 56 has a cycle in the long term, and the average value of the signal is zero.

The phase determination circuit 54 is configured to determine whether there is a phase difference and its amount, and output a feedback signal according to the phase difference to the phase shift circuit 52 according to the determination result. According to such a configuration, the phase synchronization adjustment circuit 44 has a function of synchronizing the phase of the synchronization setting clock (intermediate phase signal) OUT1 with the phase of the reference clock signal C1 to generate the timing clock signal CL11.

The output of the phase shift circuit 52 is connected to the D-type flip-flop circuit 60A which forms the main part of the synchronization setting circuit 60 (see Fig. 1).

In Fig. 1, the D-type flip-flop circuit 60A is a delay circuit. The D-type flip-flop circuit 60A receives the timing clock signal CL11 output from the phase synchronization adjustment circuit 44, and receives the I signal D1 among transmission data output from the transmission signal processing means 12 (see Fig. 2). The D-type flip-flop circuit 60A delays the I signal D1 according to the timing of the timing clock signal CL11 and then outputs the delayed signal.

The D-type flip-flop circuit 60A is configured to output the I signal delayed according to the clock timing of the timing clock signal CL11 to the driver (driver circuit) 62 and to output the inversion signal of the I signal (inverted I signal) to the driver (driver circuit) 64.

The drivers 62 and 64 are drive circuits that convert the I signal and the inverted I signal into pulse signals having voltages necessary for the modulation, to generate the modulation drive signals Dr1 and Dr2 that modulate-drive one optical phase modulation circuit 26A. The drivers 62 and 64 adjust the voltage pulses and the bias voltages of the modulation drive signals Dr1 and Dr2 so as to make the value 0 of the digital signal correspond to the optical phase 0 and to make the value 1 of the digital signal correspond to the optical phase $\pi$.

The modulation drive signals Dr1 and Dr2 generated by the drivers 62 and 64 are configured to be applied to the electric field setup electrodes E1 and E2 arranged in one optical phase modulation circuit 26A, respectively. Further, the pulse signals generated by the drivers 62 and 64 include the bias voltages necessary for the modulation.

The drivers (driver circuits) 62 and 64 and the D-type flip-flop circuit 60A stated above form the synchronization setting circuit 60.

Due to one synchronization drive unit 32A having such a configuration, one optical phase modulation circuit 26A in the optical modulator 22 stated above is driven in synchronization with the timing clock signal CL11.

Next, a configuration of the other synchronization drive unit 32B, which forms a pair with one synchronization drive unit 32A stated above, will be described.

The other synchronization drive unit 32B has a circuit arrangement which is symmetrical to one synchronization drive unit 32A for the sake of convenience of illustration, and each terminal, circuit arrangement, component arrangement, and electrical wiring in the other synchronization drive unit 32B are symmetrical to those in one synchronization drive unit 32A.

Each component of the other synchronization drive unit 32B has the same function as that of one synchronization drive unit 32A. The key point of each configuration will be described below.

As shown in the drawings, the other synchronization drive unit 32B includes a function of generating the modulation drive signals Dr3 and Dr4 that drive the other optical phase modulation circuit 26B in the optical modulator 22 based on the reference clock signal C2 directly supplied to the input terminal T2 from the clock signal generation circuit 34 and the reference clock signal C1 supplied through one synchronization drive unit 32A and the transfer path TL2.

The other synchronization drive unit 32B includes the path change-over switch 70 that transmits the reference clock signal C2 directly input to the input terminal T2 through the other path TL1b to the input/output terminal T4 and receives the reference clock signal C1 input to the input/output terminal T4 from one synchronization drive unit 32A by an internal circuit. A contact a of the path change-over switch 70 is connected to the input terminal T2, and a terminal COM2 of the path change-over switch 70 is connected to the input/output terminal T4.

The path change-over switch 70 is a selection circuit that selectively switches the connection to one of the contact a and a contact b in accordance with a selection control signal SEL2 supplied from the switch control circuit 36. The phase adjustment in the other synchronization drive unit 32B is performed using the reference clock signal C2 input to the input terminal T2 and the reference clock signal C1 input from one synchronization drive unit 32A to the input/output terminal T4. The path change-over switch 70 thus selects the input function by switching the connection to the contact b according to the selection control signal SEL2.

In contrast, when one synchronization drive unit 32A performs phase adjustment, the path change-over switch 70 is configured to select the output function by switching the connection to the contact a according to the selection control signal SEL2, and to supply the reference clock signal C2 that passes through the other synchronization drive unit 32B to the input/output terminal T3 of one synchronization drive unit 32A through the input/output terminal T4 and the transfer path TL2.

The switch control circuit 36 includes a control function that generates the selection control signal SEL2 stated above to control the selection operation of the path change-over switch 70 included in the other synchronization drive unit drive circuit 32B.

The phase interpolation circuit 72 is connected to the contact b of the path change-over switch 70. The phase interpolation circuit 72 is a circuit that phase interpolates, based on the reference clock signal C1 supplied from the path change-over switch 70 and the reference clock signal C2 directly input to the input terminal T2, the two reference clock signals to generate the intermediate signal of the reference clock signals.

The internal configuration of the phase interpolation circuit 72 is the same to each configuration of the phase interpolation circuit 42 disclosed in Fig. 3.

According to such a configuration, the phase interpolation circuit 72 includes a function of generating the intermediate phase signal (synchronization setting clock) OUT2 (phase difference is the same to that of OUT1) that has an intermediate phase between the reference clock signals C2 and C1 and supplying the synchronization setting clock OUT2 that is generated to the phase synchronization adjustment circuit 74.

Since the phase synchronization adjustment circuit 74 that receives the synchronization setting clock (intermediate phase signal) OUT2 functions in the similar way as the phase synchronization adjustment circuit 44 stated above, the phase synchronization adjustment circuit 74 is a circuit that adjusts the phase of the reference clock signal C2 so as to be synchronized with the phase of the synchronization setting clock OUT2 based on the synchronization setting clock OUT2 and the reference clock signal C2 directly input through the input terminal T2.

The internal configuration of the phase synchronization adjustment circuit 74 is the same to that of the phase synchronization adjustment circuit 44 shown in Fig. 5.

According to such a configuration, the phase synchronization adjustment circuit 74 functions so as to synchronize the phase of the reference clock signal C2 directly input to the input terminal T2 through the clock signal generation circuit 34 and the other path TL1b with the phase of the synchronization setting clock OUT2 output from the phase interpolation circuit 72. This phase synchronization adjustment circuit 74 is configured to output the reference clock signal C2 whose phase is adjusted to the D-type flip-flop circuit 76A as the timing clock signal CL31.

This D-type flip-flop circuit 76A is a delay circuit that receives the timing clock signal CL31 output from the phase synchronization adjustment circuit 74, receives the Q signal D2 among the transmission data output from the transmission signal processing unit 12 (see Fig. 2), delays the Q signal D2 according to the clock timing of the timing clock signal CL31, and outputs the delayed signal.

This D-type flip-flop circuit 76A is configured to output the Q signal delayed according to the clock timing CL31 to the driver 78 and to output the inversion signal of the Q signal (inverted Q signal) to the driver 80.

The drivers 78 and 80 are drive circuits that convert the Q signal and the inverted Q signal into pulse signals having predetermined voltages, respectively, to generate the modulation drive signals Dr3 and Dr4 that modulate-drive the other optical phase modulation circuit 26B of the optical modulator 22. The modulation drive signals Dr3 and Dr4 generated by the drivers 78 and 80 are configured to be applied to the electric field setup electrodes E3 and E4 of the other optical phase modulation circuit 26B, respectively.

The drivers 78 and 80 and the aforementioned D-type flip-flop circuit 76A form the synchronization setting circuit 76.

As stated above, due to the other synchronization drive unit 32B, the other optical phase modulation circuit 26B in the optical modulator 22 is modulate-driven in synchronization with the timing clock signal CL31. Further, the circuit arrangement of the D-type flip-flop circuit 76A and the drivers 78 and 80 forming the synchronization setting circuit 76 are symmetrical to that of the D-type flip-flop circuit 60A and the drivers 62 and 64 that form the synchronization setting circuit 60 in one synchronization drive unit 32A stated above, as shown in Fig. 1.

Next, phase synchronization of the timing clock signals CL11 and CL31 generated by the phase synchronization adjustment circuits 44 and 74 will be described.

It is assumed that the delay generated in each of the reference clock signals C1 and C2 that propagate through each line in each of the synchronization drive units 32A and 32B is negligibly small, and most of the signal delays are generated in one and the other paths (transmission lines) TL1a and TL1b and the transfer path TL2.

In such a case, the delay amount that is generated in each transfer signal from the output end of the clock signal generation circuit 34 to each of the input terminals T1 and T2 of the synchronization drive units 32A and 32B can be expressed by the following expression (1).

[Expression 1]

$$[(Dealy\_C + Delay\_B) + Delay\_A]/2$$
$$= [(Dealy\_C + Delay\_A) + Delay\_B]/2$$
$$\ldots\ldots(1)$$

The line from the output of the clock signal generation circuit 34 to the input terminal T1 through the branch point P is denoted by one path (transmission line) TL1a, and the line from the output of the clock signal generation circuit 34 to the input terminal T2 through the branch point P is denoted by the other path (transmission line) TL1b.

Delay _A indicates a delay amount that is generated in the reference clock signal C1 transferred to the input terminal T1 of one synchronization drive unit 32A from the output of the clock signal generation circuit 34 through one path TL1a.

Delay _B indicates a delay amount that is generated in the reference clock signal C2 transferred to the input terminal T2 of the synchronization drive unit 32B from the output of the clock signal generation circuit 34 through the other path TL1b.

Delay _C indicates a delay amount that is generated in the transfer of the timing clock signal in the transfer path TL2.

In such a case, (Dealy _C +Delay _B) in the left side of the expression (1) above is a delay amount for the reference clock signal C2 which passes through the other path TL1b and passes through the transfer path TL2 through the other synchronization drive unit 32B.

Delay _A is a delay amount for the reference clock signal C1 input to the input terminal T1 of one synchronization drive unit 32A through one path TL1a.

The whole left side indicates the average of the delay amounts of the reference clock signals where these two delays are generated.

(Dealy _C +Delay _A) in the right side of the expression (1) above is a delay amount for the reference clock signal C1 which passes through one path TL1a and further passes through the transfer path TL2 through the synchronization drive unit 32A.

Further, Delay _B is a delay amount for the reference clock signal input to the other synchronization drive unit 32B through the other path TL1b.

The whole right side indicates the average of the delay amounts of the reference clock signals where these two delays are generated.

At this time, since the delay amount average value of these two reference clocks are equal due to the establishment of the expression (1), clock signals (synchronization setting clocks/signals OUT1 and OUT2 described later) representative of the average values calculated by the synchronization drive units 32A and 32B are synchronized signals. By using these clock signals in the synchronization drive units 32A and 32B that are independent from each other as timing clock signals, it is possible to generate drive signals that are synchronized with each other in each of the synchronization drive units 2A and 32B.

Accordingly, in the optical transmitter 14 shown in Fig. 1, the phase synchronization of the timing clock signals CL11 and CL31 respectively generated in one synchronization drive unit 32A and the other synchronization drive unit 32B is established with a high degree of accuracy, and the phase synchronization of the modulation drive signals Dr1 and Dr2, and Dr3 and Dr4 generated from them is established with a high degree of accuracy.

It is therefore possible to drive one optical phase modulation circuit 26A and the other optical phase modulation circuit 26B of the optical modulator 22 in a synchronous manner with high accuracy.

(Operation of first exemplary embodiment)

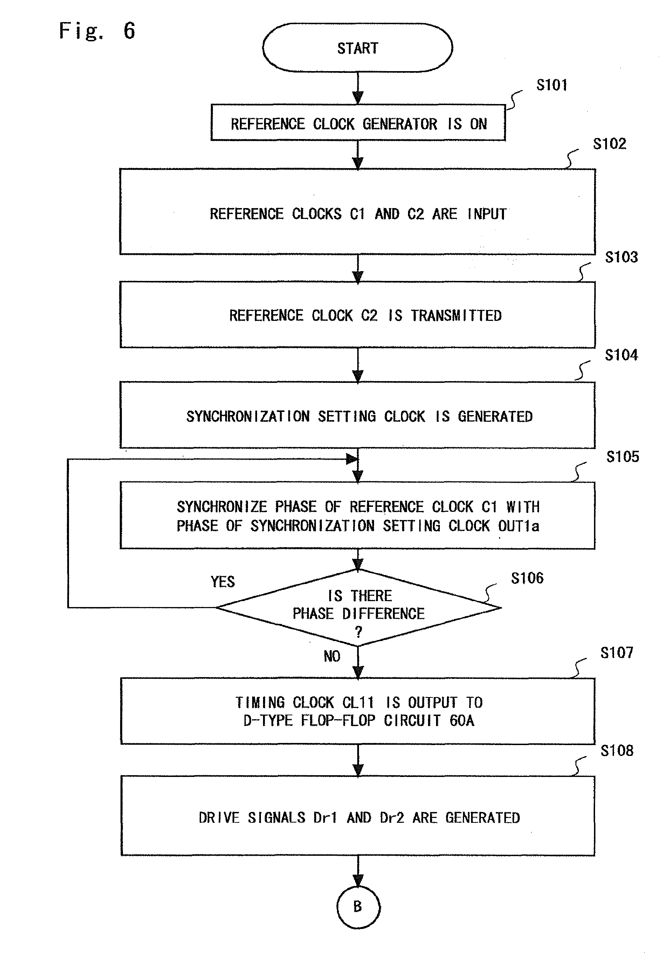

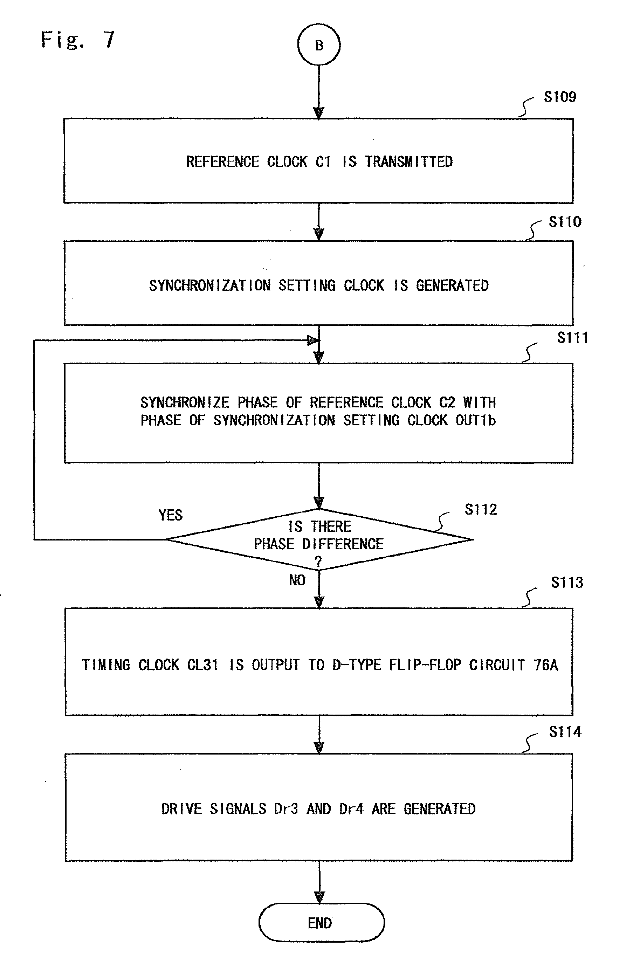

Next, with reference to flowcharts shown in Figs. 6 and 7, an operation of the optical transmitter 14 according to the first exemplary embodiment stated above will be described.

First, power is applied to the optical communication apparatus 10 (see Fig. 2), which sets the transmission signal processing unit 12 and the optical transmitter 14 to an operation state. The clock signal generation circuit 34 generates timing clock signals (Fig. 6: Step S101). Next, in order to synchronously drive one and the other optical phase modulation circuits 26A and 26B, one synchronization drive unit 32A and the other synchronization drive unit 32B start operations. One synchronization drive unit 32A and the other synchronization drive unit 32B receive the reference clock signals C1 and C2 at the same timing. The timing signals that are generated are input to the input terminals T1 and T2 of one synchronization drive unit 32A and the other synchronization drive unit 32B through one and the other paths TL1a and TL1b (Fig. 6: Step S102).

A phase synchronization control operation of one synchronization drive unit 32A will be described first, followed by the description of a phase synchronization control operation of the other synchronization drive unit 32B.

First, prior to the phase synchronization control operation of one synchronization drive unit 32A, the terminal COM2 of the path change-over switch 70 in the other synchronization drive unit 32B is connected to the contact a in accordance with the selection signal SEL2 output from the switch control circuit 36, as shown in the drawings. At the same time, the terminal COM1 of the path change-over switch 40 in one synchronization drive unit 32A is connected to the contact b in accordance with the selection signal SEL1 output from the switch control circuit 36 at the same timing, as shown in the drawings.

As a result, a signal transfer path (path) that passes through one path TL1b, the path change-over switch 70, and the transfer path TL2 is formed first.

As a result, the reference clock signal C1 generated by the clock signal generation circuit 34 is directly input to the input terminal T1 of one synchronization drive unit 32A, and the reference clock signal C2 input to the input terminal T2 of the other synchronization drive unit 32B is input to the input/output terminal T3 of one synchronization drive unit 32A through the path change-over switch 70, the input/output terminal T4, and the transfer path TL2. The reference clock C2 is further input to the phase interpolation circuit 42 through the change-over switch 40 (Fig. 6: Step S103).

When the reference clock signal C1 input to the input terminal T1 and the reference clock signal C2 input through the path change-over switch 40 are input to the phase interpolation circuit 42, the intermediate phase signal (synchronization setting clock) OUT1a, which has an intermediate phase of the reference clock signals C1 and C2, is generated (Fig. 6: Step S104/one drive circuit side-intermediate phase signal generation process).

Subsequently, the intermediate phase signal (synchronization setting clock) OUT1a generated by the phase interpolation circuit 42 is transmitted to the phase synchronization adjustment circuit 44 as the intermediate phase signal OUT1.

In this phase synchronization adjustment circuit 44, as described above, the phase of the reference clock signal C1 directly input to the input terminal T1 is adjusted to be equal to the phase of the intermediate phase signal (synchronization setting clock) OUT1 (Fig. 6: Step S105/one drive circuit side·reference clock phase adjustment process). At the same time, it is determined whether there is a phase difference between them, and the determination is made repeatedly and the adjustment is performed to eliminate the phase difference between them, as described above (Fig. 6: Step S106).

The reference clock signal C1 whose phase is adjusted by the phase synchronization adjustment circuit 44 is output to the D-type flip-flop circuit 60A as the timing clock signal CL11. Specifically, the synchronization setting circuit 60 of one synchronization drive unit 32A takes the reference clock signal C1 whose phase is adjusted to the phase of the synchronization setting clock OUT1 as the timing clock signal to drive one optical phase modulation circuit 26A (Fig. 6: Step S107/one drive circuit side·timing clock signal setting process).

Next, the reference clock signal C1 whose phase is adjusted to be equal to that of the intermediate phase signal OUT1 is input to the D-type flip-flop circuit 60A as the timing clock signal CL11, and the operation timing of the D-type flip-flop circuit 60A is set. The I signal D1, which is the transmission data output from the transmission signal processing unit 12 (see Fig. 2), is delayed according to the clock timing of the timing clock signal CL11.

The modulation drive signals Dr1 and Dr2 are respectively generated from the I signal and the inverted I signal that are delayed, as stated above. Specifically, the D-type flip-flop circuit 60A generates the modulation drive signals Dr1 and Dr2 for one optical phase modulation circuit 26A based on the data signal D1 that is externally input (Fig. 6: Step S108/one drive circuit side·drive signal generation process). The modulation drive signals Dr1 and Dr2 that are generated are supplied to the electric field setup electrodes E1 and E2 of one optical phase modulation circuit 26A of the optical modulator 22 from the drivers 62 and 64 as the synchronization drive signals for driving modulators.

Next, a synchronization control operation in the other synchronization drive unit 32B will be described.

First, prior to the synchronization control operation of the other synchronization drive unit 32B, as is similar to the case of one synchronization drive unit 32A stated above, the terminal COM1 of the path change-over switch 40 in one synchronization drive unit 32A is connected to the contact a, which is the opposite side from that in the drawings, in accordance with the selection signal SEL1 output from the switch control circuit 36. At the same time, the terminal COM2 of the path change-over switch 70 in the other synchronization drive unit 32B is connected to the contact b, which is the opposite side from that in the drawings, in accordance with the selection signal SEL2 output from the switch control circuit 36. As a result, first, a signal transfer path (path) that passes through the other path TL1a, the path change-over switch 40, and the transfer path TL2 is formed.

As a result, the reference clock signal C2 generated by the clock signal generation circuit 34 is directly input to the input terminal T2 of the other synchronization drive unit 32B, and the reference clock signal C1 input to the input terminal T1 of one synchronization drive unit 32A is input to the input/output terminal T4 of the other synchronization drive circuit 32B through the path change-over switch 40, the input/output terminal T3, and the transfer path TL2. This reference clock signal C1 is further input to the phase interpolation circuit 72 through the path change-over switch 70 (Fig. 7: Step S109/the other drive circuit side·input path switching process).

When the reference clock signal C2 input to the input terminal T2 and the reference clock signal C1 input through the path change-over switch 70 are input to the phase interpolation circuit 72, the intermediate phase, which is the center of the phase difference between the reference clock signals C2 and C1, is calculated and the intermediate phase signal (synchronization setting clock) OUT1b is generated (Fig. 7: Step S110/the other drive circuit side·intermediate phase signal generation process).

Subsequently, since the intermediate phase signal (synchronization setting clock) OUT1b generated by the phase interpolation circuit 72 has a clock which is the same timing as the intermediate phase signal (synchronization setting clock) OUT1a, as described in the expression (1) above, this is transmitted to the phase synchronization adjustment circuit 74 as the synchronization setting clock OUT2.

In the phase synchronization adjustment circuit 74, as is similar to the case of one synchronization drive unit 32A stated above, the phase of the reference clock signal C2 directly input to the input terminal T2 is adjusted to be synchronized with the phase of the intermediate phase signal (synchronization setting clock) OUT1 (Fig. 7: Step S111/the other drive circuit side·reference clock phase adjustment process).

In this case, it is determined whether there is a phase difference between them at the same time, and the adjustment is performed repeatedly until when the phase difference between them is eliminated (Fig. 7: Step S 112).

After that, the reference clock signal C2 whose phase is adjusted by the phase synchronization adjustment circuit 74 is output to the D-type flip-flop circuit 76A as the timing clock signal CL31. Specifically, the synchronization setting circuit 76 of the other synchronization drive unit 32B takes the reference clock signal C2 whose phase is adjusted to be equal to the phase of the synchronization setting clock OUT2 as the timing clock signal for driving one optical phase modulation circuit 26B (Fig. 7: Step S113/the other drive circuit side·timing clock signal setting process).

The reference clock signal C2 whose phase is adjusted to be equal to the phase of the intermediate phase signal OUT1 is input to the D-type flip-flop circuit 76A as the timing clock signal CL31, and the operation timing of the D-type flip-flop circuit 76A is set. The Q signal D2, which is the transmission data output from the transmission signal processing unit 12 (see Fig. 2), is delayed according to the clock timing of the timing clock signal CL31.

The modulation drive signals Dr1 and Dr2 are respectively generated in the drivers 78 and 80 from the Q signal and the inverted Q signal that are delayed, as described above. Specifically, the D-type flip-flop circuit 76A generates the modulation drive signals Dr3 and Dr4 for one optical phase modulation circuit 26B based on the data signal D2 that is externally input (Fig. 7: Step S114/the other drive circuit side·drive signal generation process), and the modulation drive signals Dr3 and Dr4 that are generated are supplied to the electric field setup electrodes E3 and E4 of the other optical phase modulation circuit 26B of the optical modulator 22 from the drivers 78 and 80 as synchronization drive signals for driving modulators.

In this way, the modulation drive signals Dr1 and Dr2 and the modulation drive signals Dr3 and Dr4 generated by one synchronization drive unit 32A and the other synchronization drive unit 32B, one synchronization drive unit 32A and the other synchronization drive unit 32B being operated synchronously, are supplied to one optical phase modulation circuit 26A and the other optical phase modulation circuit 26B of the optical modulator 22, respectively.

In the optical modulator 22, the laser beam emitted from the laser diode 20 that is installed in advance is intensity modulated by the modulation drive signals Dr1 and Dr2 and the modulation drive signals Dr3 and Dr4 from the corresponding synchronization drive units 32A and 32B, respectively, as described above in one optical phase modulation circuit 26A and the other optical phase modulation circuit 26B, and the optical signal (I signal) that passes through one optical phase modulation circuit 26A and the phase shifter 28 and the optical signal (Q signal) that passes through the other optical phase modulation circuit 26B are combined by the multiplexer 30, and the optical signal that is combined is output to the optical fiber F.

Since the drive signals that drive one optical phase modulation circuit 26A and the other optical phase modulation circuit 26B are generated based on the intermediate phase signals OUT1 and OUT2 whose phases are synchronized with each other, respectively, the optical phase modulation circuits 26A and 26B may synchronously perform intensity modulation with high accuracy and are coupled in the multiplexer 30 with high accuracy. It is therefore possible to obtain the optical signal of the phase modulation signal with high accuracy.

In the operations of the first exemplary embodiment described above, each operation content executed in each process may be programmed, and a computer may execute the program. In this case, the program of this operation content may be recorded in a non-transitory readable medium so that it can be read out by the computer.

Also in this way, it is possible to efficiently achieve the exemplary object of the present invention stated above.

As described above, according to the first exemplary embodiment, it is possible to generate phase-synchronized signals in one synchronization drive unit 32A and the other synchronization drive unit 32B that are two integrated circuits independent from each other, and to use these signals as timing clock signals that are synchronized with each other with high accuracy. It is therefore possible to establish timing synchronization between independent synchronization drive units 32A and 32B, and to synchronously operate the synchronization drive units 32A and 32B. Further, by performing drive signal generation processing on the basis of the timing clock signals that are synchronized with high accuracy, it is possible to generate and output drive signals whose timings are matched in the two circuits.

Driving the optical modulator 22 using the drive signals generated as a result of such processing brings about effects that intensities of the two optical signals modulated according to the two respective input data signals are balanced, and the accuracy of the optical modulation signal obtained by coupling the optical signals becomes high and excellent. It is therefore possible to output a multi-valued optical modulation signal modulated with high accuracy from the optical modulator 22, which makes it possible to dramatically reduce the possibility that the reception signal is falsely detected when phase detection is performed by a demodulation circuit included in a receiver-side communication apparatus, for example, and brings about a functional effect that the communication quality is improved.

While the operation flow is formed so that the drive signal generation processing operation in one synchronization drive unit 32A (Step S104 to Step S108) is performed prior to the drive signal generation processing operation in the other synchronization drive unit 32B (Step S109 to Step S114) in the flowcharts shown in Figs. 6 and 7, the order of the processing operations is not limited to this. The drive signal generation processing in the other synchronization drive unit 32B may be performed before the drive signal generation processing in one synchronization drive unit 32A.

Further, while the optical transmitter 14 according to the first exemplary embodiment is configured to modulate transmission data of QPSK method to transmit the modulated data, the present invention is not limited to this but may be applied also to other modulation methods such as a differential QPSK (DQPSK) method or a quadrature amplitude modulation (QAM) method.

Further, while described in the first exemplary embodiment is the processing of generating timing clock signals that are synchronized for the drive circuits that generate drive signals to drive the optical modulator 22, the present invention is not limited to this but may be applied to timing control for various clock signals or various data signals used in each integrated circuit in a configuration using a plurality of integrated circuits.

[Second exemplary embodiment]

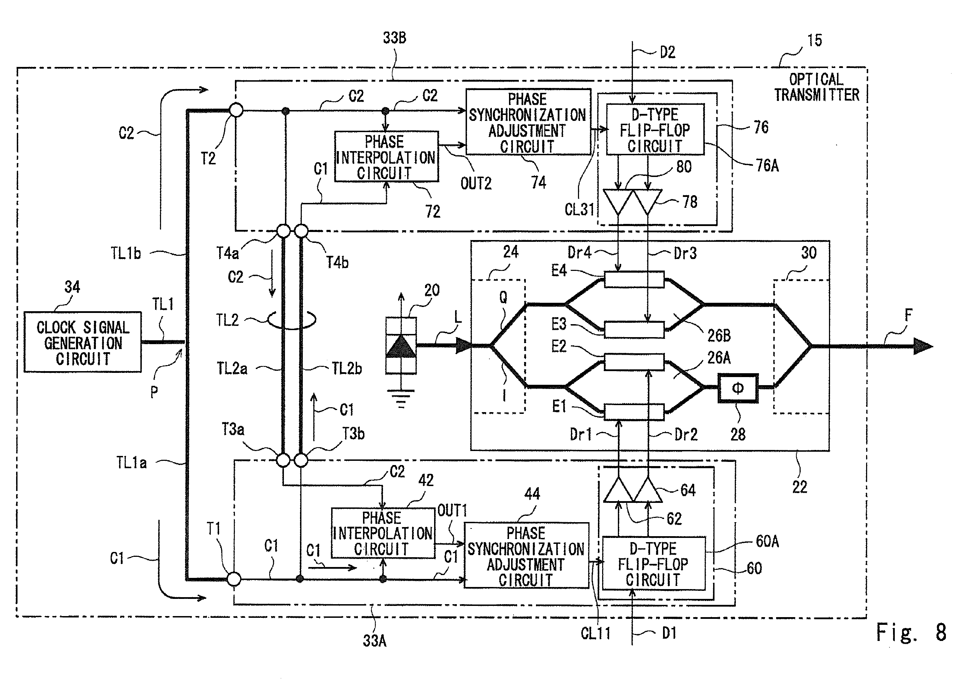

Next, with reference to Fig. 8, a second exemplary embodiment according to the present invention will be described.

The same components as those in the first exemplary embodiment stated above are denoted by the same reference symbols.

As shown in Fig. 8, in an optical transmitter 15 according to the second exemplary embodiment, the path change-over switches 40 and 70 and the switch control circuit 36 according to the first exemplary embodiment stated above are removed and two independent transfer paths TL2a and TL2b are provided.

In this case, one transfer path TL2a is arranged to directly transfer the reference clock signal C2 received by the other synchronization drive unit 72B to the phase interpolation circuit 42 in one synchronization drive unit 72A. Further, the other transfer path TL2b is arranged to directly transfer the reference clock signal C1 received by one synchronization drive unit 72A to the phase interpolation circuit 72 in the other synchronization drive unit 72B.

The detail will be described below.

As shown in Fig. 7, one path TL1a, which is divided at the branch point P in the output of the clock signal generation circuit 34, is connected to the input terminal T1 of one synchronization drive unit 33A. This input terminal T1 is connected to an input terminal T4b coupled to the phase interpolation circuit 72 in the other synchronization drive unit 72A through an output terminal T3b of one synchronization drive unit 33A and the other transfer path TL2b.

The input terminal T2 of the other synchronization drive unit 33B is connected to an input terminal T3a coupled to the phase interpolation circuit 42 in the one synchronization drive unit 33A through an output terminal T4a of the other synchronization drive unit 33B and the other transfer path TL2a.

The reference clock signal C1 input to the input terminal T1 of one synchronization drive unit 33A through one path TL1a is input to each of the phase interpolation circuit 42 and the phase synchronization circuit 44, and is also transferred to the input terminal T4b on the side of the phase interpolation circuit 72 of the other synchronization drive unit 33B through the transfer path TL2b at the same time.

In the similar way, the reference clock signal C2 input to the input terminal T2 of the other synchronization drive unit 33B through the other path TL1b is input to each of the phase interpolation circuit 72 and the phase synchronization circuit 74, and is also transferred to the input terminal T3a on the side of the phase interpolation circuit 42 of the one synchronization drive unit 33A through the transfer path TL2a at the same time.

More specifically, as shown in Fig. 8, first, the input terminals T3a and T3b of one synchronization drive unit 33A are connected to the input terminals T4a and T4b of the other synchronization drive unit 33B through the transfer paths TL2a and TL2b, respectively.

The other path TL1b, which is divided at the branch point P in the output of the clock signal generation circuit 34, is connected to the input terminal T2 of the other synchronization drive unit 33B.

The input terminal T2 is connected to the input terminal T3a of one synchronization drive unit 33A, and is connected to each of the phase interpolation circuits 72 and 74 of the other synchronization drive unit 33B, whereby the reference clock signal C2 directly input to the input terminal T2 is input to each of the phase interpolation circuits 72 and 74.

The input terminal T4b of the other synchronization drive unit 33B is connected to the other input of the phase interpolation circuit 72, and the reference clock signal C1 from the one synchronization drive unit 33A input to the input terminal T4b is also input to the phase interpolation circuit 72.

The transfer paths (transmission lines) TL2a and TL2b described above are connected to the input terminals T4a and T4b of the other synchronization drive unit 33B, respectively, and are connected to one synchronization drive unit 33A through the transfer paths TL2a and TL2b.

These transfer paths TL2a and TL2b are set to have the same length, and are arranged so as to be close to each other on a substrate that connects one and the other synchronization drive units 33A and 33B. It is therefore possible to assume that the delay amounts of the transfer signals occurred in the transfer paths TL2a and TL2b are equal to each other with high accuracy.

It is assumed that, the delay occurred in each of the reference clock signals C1 and C2 is negligibly small in propagation of signals that pass through each line in one and the other synchronization drive units 33A and 33B,. It is further assumed that the signal delay occurs in one and the other paths TL1a and TL1b and the transfer paths TL2a and TL2b, as is similar to the case in the first exemplary embodiment stated above. In this case, the delays occurred in the transfer signals from the output end of the clock signal generation circuit 34 to the terminals T1 and T2 of one and the other synchronization drive units 33A and 33B are equal to each other, and this will be expressed as shown in the following expression (2).

[Expression 2]

$$[(Dealy\_C + Delay\_B) + Delay\_A]/2$$
$$= [(Dealy\_D + Delay\_A) + Delay\_B]/2$$
$$\ldots\ldots(2)$$

The line from the output of the clock signal generation circuit 34 to the input terminal T1 through the branch point P is one path TL1a, and the line from the output of the clock signal generation circuit 34 to the input terminal T2 through the branch point P is the other path TL1b.

Delay_A indicates a delay generated in the reference clock signal C1 transferred to the input terminal T1 of one synchronization drive unit 33A from the output of the clock signal generation circuit 34 through one path TL1a.

Delay_B indicates a delay generated in the reference clock signal C2 input to the input terminal T2 of the other synchronization drive unit 33B from the output of the clock signal generation circuit 34 through the other path TL1b.

Delay_C indicates a delay generated in the transfer of the reference clock signal C2 in one transfer path TL2a.

Delay_D indicates a delay generated in the transfer of the reference clock signal C1 in the other transfer path TL2b.

When analyzed on the basis of such setting conditions, it will be understood that (Dealy_C +Delay_B) in the left side of the expression (2) above is the delay amount for the reference clock signal C2 that passes through the other path TL1b and passes through one transfer path TL2a through the other synchronization drive unit 33B, and Delay_A is the delay amount for the reference clock signal C1 that passes through one path TL1a and is input to the input terminal T1 of one synchronization drive unit 33A.

The whole left side of the expression (2) above indicates the average of the delay amounts of the reference clock signals C2 and C1 where these two delays occur.

Further, it will be understood that (Dealy_D +Delay_A) in the right side of the expression (2) above is the delay amount for the reference clock signal C1 that passes through one path TL1a and further passes through the other transfer path TL2b through one synchronization drive unit 33A, and Delay_B is the delay amount for the reference clock signal C2 input to the input terminal T2 of the other synchronization drive unit 33B through the other path TL1b.

The whole right side of the expression (2) above indicates the average of the delay amounts of the reference clock signals C1 and C2 where these two delays occur.

At this time, the average value of the delay amounts in these two reference clock signals C1 and C2 becomes equal in any route. By calculating these average values by one and the other synchronization drive units 33A and 33B separately to generate each timing clock signal, these timing clock signals are synchronized. When these timing clock signals are used for one and the other synchronization drive units 33A and 33B that are independent from each other, it is possible to generate synchronization drive control signals by the synchronization drive units 33A and 33B.

Accordingly, in the optical transmitter 15 shown in Fig. 8, the timing clock signals CL11 and CL31 respectively generated in one and the other synchronization drive units 33A and 33B are synchronized with each other, and the modulation drive signals Dr1 to Dr4 that are generated from the timing clock signals CL11 and CL31 are synchronized with one another. It is therefore possible to drive one optical phase modulation circuit 26A and the other optical phase modulation circuit 26B of the optical modulator 22 in a synchronous manner.

While each of the transfer paths TL2a and TL2b is arranged on a substrate plane in the example shown in Fig. 8, another wiring method may be used. As an example, thin insulation layers are formed on the aforementioned substrate in multiple layers, and the transfer paths TL2a and TL2b may be wired in different layers. In such a case, the transfer paths TL2a and TL2b may be arranged in the respective layers by the same wiring path on a plane.

As described above, the optical transmitter 15 according to the second exemplary embodiment does not include the path change-over switches 40 and 70 (see Fig. 1) and the switch control circuit 36 (see Fig. 1), but is configured to generate the modulation drive signals Dr1, Dr2, Dr3, and Dr4 that drive the optical modulator 22 to drive the optical modulator 22. Such a connection configuration is different from that in the optical transmitter 14 shown in Fig. 1, and the other configurations are the same to those in the first exemplary embodiment stated above.

In the operation of the optical transmitter 15 according to the second exemplary embodiment, the reference clock signal C1 or C2 transferred by way of the other synchronization drive unit 33A or 33B is input to the terminals T3a and T4b of one and the other synchronization drive units 33A and 33B without switching by the change-over switches. The phase interpolation circuits 42 and 72 and the phase synchronization circuits 44 and 74 are thus able to continuously perform an operation of adjusting the phase synchronization without stopping the phase adjustment operation during the operation of the other drive circuit 33A or 33B.

The other configurations and the functional effects are the same to those in the first exemplary embodiment stated above.

Since the path change-over switches 40 and 70 and the switch control circuit 36 shown in Fig. 1 are not provided in the second exemplary embodiment, a reduction in size is achieved due to the simple configuration, and low power consumption is further achieved.

In summary, one and the other synchronization drive units 33A and 33B are able to generate timing clock signals that are phase synchronized with high accuracy. One and the other synchronization drive units 33A and 33B according to the second exemplary embodiment are therefore able to operate synchronously, to perform drive signal generation processing on the basis of the timing clock signals that are synchronized with high accuracy, and to generate and output the modulation drive signals whose timings are matched with high accuracy.

Driving the optical modulator 22 using such modulation drive signals brings about effects that the intensities of the two optical signals modulated according to the respective input data signals are balanced and the accuracy of the optical modulation signal obtained by coupling these optical signals becomes high and excellent. It is therefore possible to output the optical modulation signal that is modulated with high accuracy from the optical modulator 22, which brings about a functional effect that it greatly contributes to an improvement in the communication quality.

Furthermore, since there is no particular restriction in the second exemplary embodiment that one and the other synchronization drive units 33A and 33B alternately perform the phase adjustment operation, the synchronization drive units 33A and 33B are able to continuously perform control of adjusting the phase synchronization, which brings about an effect that the whole time required for the phase adjustment is reduced.

[Third exemplary embodiment]

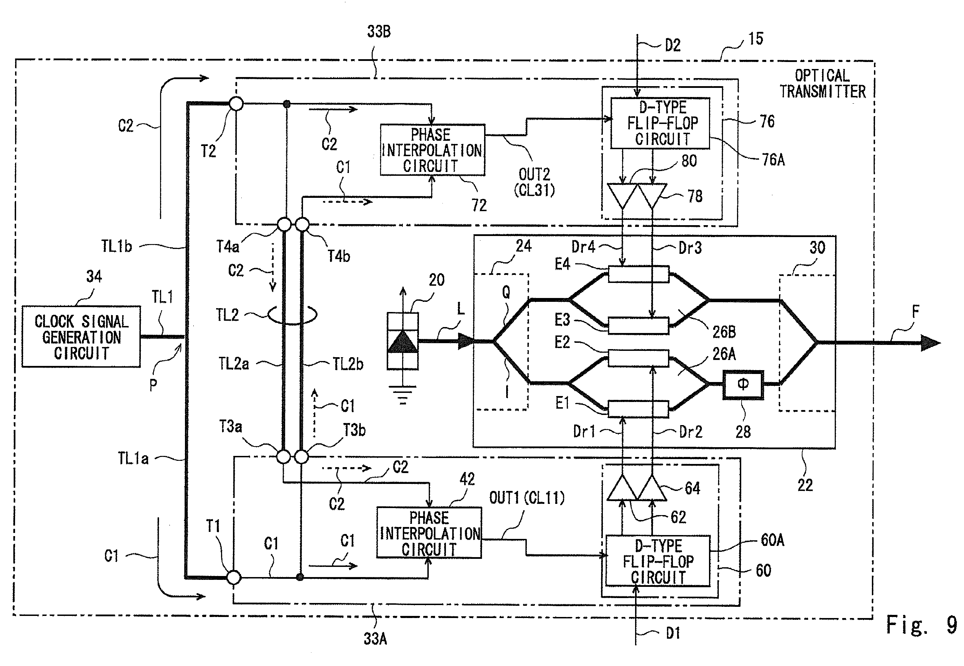

Next, with reference to Fig. 9, a third exemplary embodiment of the present invention will be described.

The same components as those in the second exemplary embodiment (Fig. 8) stated above are denoted by the same reference symbols.

In Fig. 9, an optical transmitter 82 according to the third exemplary embodiment is included, as is similar to the case of the optical transmitter 15 in the second exemplary embodiment stated above, in the optical communication apparatus 10 in place of the optical transmitter 14 in the optical communication apparatus 10 shown in Fig. 2, and forms the optical communication apparatus 10 with the transmission signal processing unit 12.

In Fig. 9, the optical transmitter 82 according to the third exemplary embodiment has such a configuration in which the phase synchronization circuits 44 and 74 are removed from one and the other synchronization drive units 33A and 33B according to the second exemplary embodiment stated above, respectively, and the outputs of the phase interpolation circuits 42 and 72 are directly connected to the D-type flip-flop circuits 60A and 76A, respectively.

According to each configuration of the optical transmitter 82 according to the third exemplary embodiment, the intermediate phase signals (synchronization setting clocks) OUT1 and OUT2 generated by the phase interpolation circuits 42 and 72 are input to the D-type flip-flop circuits 60A and 76A as clock timings, respectively. The D-type flip-flop circuits 60A and 76A use the intermediate phase signals (synchronization setting clocks) OUT1 and OUT2 to delay the I signal D1 and the Q signal D2 output from the transmission signal processing unit 12 (see Fig. 2) according to the clock timings of the timing clock signals OUT1 and OUT2, respectively.

The I signal and the inverted I signal and the Q signal and the inverted Q signal delayed by the D-type flip-flop circuits 60A and 76A are output to the drivers 62 and 64 and the drivers 78 and 80, respectively, and the drivers 62, 64, 78, and 80 generate drive signals, as is similar to the case in the second exemplary embodiment stated above. The modulation drive signals Dr1 to Dr4 thus generated are applied to the electric field setup electrodes E1 to E4 of the optical modulator 22, as is similar to the case in the second exemplary embodiment stated above, whereby the optical signal that is intensity modulated according to the input data signal is output to the optical fiber F through the multiplexer 30.

The other configurations and the operations are the same to those in the second exemplary embodiment stated above.

As described above, in the third exemplary embodiment, the path change-over switches 40 and 70 and the switch control circuit 36 are not included, as is similar to the optical transmitter 70 according to the second exemplary embodiment stated above, which brings about an effect that a reduction in size is achieved due to the simple configuration and low power consumption is achieved.

Drive circuits 84a and 84b may be synchronously operated. The drive circuits 84a and 84b are able to perform drive signal generation processing with reference to the timing clock signals whose phases are synchronized with high accuracy, and generate and output the drive signals whose timings are matched with high accuracy.

By driving the optical modulator 22 using such drive signals, the intensities of the two optical signals modulated according to the input data signals are balanced, and the accuracy of the optical modulation signal obtained by coupling the optical signals becomes high and excellent. This brings about an effect that it is possible to output the optical modulation signal which is modulated with high accuracy from the optical modulator 22 and the communication quality is improved.

Further, since there is no restriction that the two drive circuits 84a and 84b alternately perform the adjustment operation in the third exemplary embodiment, each of the drive circuits 84a and 84b is able to continuously perform the control of adjusting phase synchronization, which brings about an effect that the time required for the phase adjustment is reduced.

Furthermore, the phase synchronization circuits 44 and 74 are not included in the third exemplary embodiment as stated above, which brings about an effect that a reduction in size is achieved due to the simple configuration and low power consumption is further achieved.

While shown in the first to third exemplary embodiments is the case in which the clock signal generation circuit 34 includes one output path, the path is divided at the branch point P in the middle of the path, and the respective other ends of one and the other paths that are branched are connected to one and the other synchronization drive units 32A, 32B, 33A, 33B, 84A, and 84B, the present invention is not limited to this. The clock signal generation circuit 34 may include output terminals for two systems, the output terminals may connect to the respective transmission lines, and the respective other ends of the transmission lines may be connected to the input terminals T1 and T2 of the one and the other synchronization drive unites 32A, 32B, 33A, 33B, 84A, and 84B.

Furthermore, in the operations of the first to third exemplary embodiments described above, each execution content executed in each process may be programmed, and a computer may execute the program. In this case, this program may be recorded to be readable in a non-transitory readable medium (e.g., a DVD (TM), a CD (TM), a flash memory). In this case, this program is read out by the computer from the recording medium and is executed.

While the present invention has been described above with reference to the exemplary embodiments, the present invention is not limited to the above exemplary embodiments. The configuration and details of the present invention can be modified in various manners which can be understood by those skilled in the art within the scope of the invention.

While the present invention has been described as a hardware configuration in the exemplary embodiments stated above, the present invention is not limited to it. The present invention may achieve any processing by causing a central processing unit (CPU) to execute a computer program.

Further, the program stated above can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magnetooptical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

This application claims the benefit of priority, and incorporates herein by reference in its entirety, the following Japanese Patent Application No. 2011-108173 filed on May 13, 2011.

The novel technical contents in the exemplary embodiments stated above may be summarized as shown in the following Supplementary notes.

While a part or all of the aforementioned exemplary embodiments may be summarized as shown in the following Supplementary note 1 to Supplementary note 13 as a novel technique, the present invention is not limited to them.

(Supplementary note 1) <Generalized by system (no phase synchronization adjustment circuit)>

A signal synchronization transmission system comprising:

one and another transmission processing devices that transmit a plurality of pieces of data in a phase-synchronous manner and one and another synchronization drive means that synchronously control transmission operations of the respective transmission processing devices, wherein
the one and the other synchronization drive means comprise:

phase interpolation circuits that externally receive reference clocks for setting operation timings of the transmission processing devices through one and another paths that are set in advance, and perform phase interpolation processing on the reference clocks to generate synchronization setting clocks; and
synchronization setting circuits that receive the synchronization setting clocks as timing clocks, and based on the timing clocks, synchronously set timings of data transmission operations of the corresponding transmission processing devices through transmission data signals separately input,
the synchronization drive means each transmit, prior to generation of the synchronization setting clock, the reference clock to the other synchronization drive means as a transfer clock through a transfer path that is set in advance, and
the phase interpolation circuits each include functions of calculating, when generating the synchronization setting clock, an intermediate phase which is a center of a phase difference between the reference clock and the transfer clock transmitted from the other synchronization drive means to generate the synchronization setting clock based on the intermediate phase.

(Supplementary note 2) <Applied to synchronization transmission system/optical modulator>

The signal synchronization transmission system according to Supplementary note 1, wherein
the one and the other transmission processing devices are formed of one and another optical phase modulation circuits that are set to modulate a laser beam from a certain common light source based on the data signals for transmission, then combine the modulated beams, and externally output the combined beam, and
the synchronization setting circuits are operated at timings of the timing clocks output from the phase interpolation circuits, and include functions of converting the data signals for transmission into voltage pulses that are drive signals for the optical phase modulation circuits and transmitting the voltage pulses to each arm of the corresponding one or the other phase interpolation circuit.

(Supplementary note 3) <System/phase synchronization adjustment circuit added>

The signal synchronization transmission system according to Supplementary note 1 or 2, wherein
a phase synchronization adjustment circuit is provided between the phase interpolation circuit and the synchronization setting circuit of each of the synchronization drive means, and
when the timing clocks are specified, the phase synchronization adjustment circuits are configured to adjust the reference clocks that are externally input so as to be synchronized with the synchronization setting clocks of the intermediate phase output from the phase interpolation circuits, and to transmit the reference clocks whose phases are adjusted to the respective corresponding synchronization setting circuits as the timing clocks.

(Supplementary note 4) <Switch transfer of system/clock>

The signal synchronization transmission system according to Supplementary note 1 or 2, wherein the synchronization drive means each include a change-over switch that alternately transmits the reference clock received by the synchronization drive means to the phase interpolation circuit of another synchronization drive means through the transfer path as a transfer clock.

(Supplementary note 5) <Switch change-over control means>

The signal synchronization transmission system according to Supplementary note 4, wherein
the change-over switches are set to a state in which the change-over switches are communicated with each other between the synchronization drive means through the transfer path, and are wired so as to be able to perform a synchronous switching operation, and
the change-over switches include switch control means that simultaneously control switch of operations of the change-over switches at the same timing.

(Supplementary note 6) <Synchronization setting circuit>

The signal synchronization transmission system according to Supplementary note 2, wherein each of the synchronization setting circuits is configured to include a D-type flip-flop that operates in accordance with the timing clock and converts the transmission data signal that is externally input into voltage pulses corresponding to an optical phase 0 and an optical phase $\pi$ to output the voltage pulses, and two drivers that apply the voltage pulses to each arm of the corresponding one optical phase modulation circuit.

(Supplementary note 7) <Synchronization drive system for optical modulator>

A synchronization drive system for optical modulator comprising one and another synchronization drive means that synchronously control transmission operations of one and another optical phase modulation circuits that transmit a plurality of pieces of data in a phase-synchronous manner, wherein
the one and the other synchronization drive means comprise phase interpolation circuits that externally receive reference clocks for setting operation timings of the optical phase modulation circuits through one and another paths that are set in advance, and perform phase interpolation processing on the reference clocks to generate synchronization setting clocks, and synchronization setting circuits that receive the synchronization setting clocks as timing clocks and based on the timing clocks, synchronously set timings of data transmission operations in the corresponding optical phase modulation circuits through transmission data signals separately input,
the synchronization drive means each include a function of transmitting the reference clock that is received to the other synchronization drive means as a transfer clock through a transfer path that is set in advance, and
the phase interpolation circuits each include functions of calculating, when generating the synchronization setting clock, an intermediate phase which is a center of a phase difference between the reference clock and the transfer clock transmitted from the other synchronization drive means to generate the synchronization setting clock based on the intermediate phase.

(Supplementary note 8) <Method invention/corresponding to Supplementary note 1 >

A signal synchronization transmission method comprising one and another transmission processing devices that transmit a plurality of pieces of data in a phase-synchronous manner and one and another synchronization drive means that synchronously control transmission operations of the respective transmission processing devices, comprising:

externally receiving reference clocks for setting operation timings of the transmission processing devices by the one and the other synchronization drive means through one and another paths that are set in advance;
performing phase interpolation processing, by phase interpolation circuits included in the synchronization drive means, on the reference clocks that are input, to generate synchronization setting clocks;
receiving the synchronization setting clocks that are generated as timing clocks and based on the timing clocks, synchronously setting timings of data transmission operations of the corresponding transmission processing devices, and when synchronously setting the timings, transmitting transmission data signals that are externally input to each of the corresponding transmission processing devices as device drive signals at timings of the transmission operations, these operation procedures being executed by the synchronization setting circuits of the synchronization drive means; and
prior to generation of the synchronization setting clocks generated by the phase interpolation circuits, executing, by each of the synchronization drive means, transfer of the reference clock to mutually transmit the reference clock received by the synchronization drive means to the other synchronization drive means through a transfer path that is set in advance as a transfer clock; and
in the phase interpolation processing executed when the synchronization setting clocks are generated, calculating, by each of the phase interpolation circuits, an intermediate phase which is a center of a phase difference between the reference clock and the transfer clock transmitted from the other synchronization drive means, and generating, by each of the phase interpolation circuits, the synchronization setting clock based on the intermediate phase.

(Supplementary note 9) <Method invention/phase synchronization adjustment circuit added>

The signal synchronization transmission method according to Supplementary note 8, wherein
a process of generating timing clocks that generates the timing clocks based on the reference clocks is provided between the process of generating the synchronization setting clocks and the process of synchronously setting timings of data transmission operations of the transmission processing devices by the timing clocks, wherein
in the process of generating the timing clocks, the phase synchronization adjustment circuits included in the synchronization drive means perform phase adjustment processing that matches phases of the reference clocks received by the synchronization drive means with phases of the synchronization setting clocks of the intermediate phase generated by the corresponding phase interpolation circuits, whereby the corresponding synchronization setting circuit specifies the reference clock whose phase is adjusted as the timing clock.

(Supplementary note 10) <Corresponding to Supplementary note 2>

The signal synchronization transmission method according to Supplementary note 8 or 9, comprising:

setting the one and the other transmission processing devices as one and another optical phase modulation circuits that are set to modulate a laser beam emitted from a certain common light source, combine the modulated beams, and externally output the combined beam, and when data signals that are modulation drive signals for the one and the other optical phase modulation circuits are synchronously set,
executing, by the synchronization setting circuits, operations of being operated at timings of the timing clocks output from the phase interpolation circuits in the synchronization drive means, converting the transmission data signals that are externally input into voltage pulses for the optical phase modulation circuits at timings of the timing clocks, and transmitting the voltage pulses to each arm of the corresponding one or the other optical phase modulation circuit.

(Supplementary note 11) <Program invention/corresponding to Supplementary note 8>

A signal synchronization transmission program comprising:

a reference clock input processing function that externally receives reference clocks for setting operation timings of one and another transmission processing devices that transmit a plurality of pieces of data in a phase-synchronous manner for each transmission processing device through one and another paths that are set in advance to hold the reference clocks by one and another synchronization drive means that synchronously control transmission operations of the transmission processing devices;
a synchronization setting clock generation processing function that performs phase interpolation processing on the reference clocks that are input, generates synchronization setting clocks for the transmission processing devices for each corresponding transmission processing device, and holds the synchronization setting clocks by the one and the other synchronization drive means; and
a data signal synchronization setting processing function that specifies the synchronization setting clocks that are generated as timing clocks, and based on the timing clocks, synchronously sets timings of data transmission operations of the corresponding transmission processing devices and separately transmits transmission data signals that are externally input separately to the corresponding transmission processing devices as device drive signals at timings of the data transmission operations, wherein
the timing clock generation processing function further includes a reference clock transfer processing function that mutually transmits the reference clocks separately received in advance through the one and the other paths to the other transmission processing device as transfer clocks through a transfer path that is set in advance,
the synchronization setting clock generation processing function includes, calculating, in the phase interpolation processing performed when the synchronization setting clock generation processing function is performed, an intermediate phase which is a center of a phase difference between the reference clock and the transfer clock transmitted from the other transmission processing device and generating the synchronization setting clock based on the intermediate phase, and
these processing functions are achieved by computers included in the one and the other synchronization drive means in a synchronous manner.

(Supplementary note 12) <Program invention/phase synchronization adjustment processing added>

The signal synchronization transmission program according to Supplementary note 10, wherein
the synchronization setting clock generation processing function includes a timing clock generation processing function that generates and processes the timing clocks based on the reference clocks,
the timing clock generation processing function includes a phase synchronization adjustment processing function that matches phases of the synchronization setting clocks of the intermediate phase generated by the each phase interpolation processing with phases of the reference clocks received by the corresponding synchronization drive means and a timing clock setting processing function that sets the reference clocks whose phases are adjusted as the timing clocks, and these functions are achieved by the computers in a synchronous manner.

(Supplementary note 13) <Corresponding to Supplementary note 10>

The signal synchronization transmission program according to Supplementary note 11 or 12, wherein
the one and the other transmission processing device are set as one and another optical phase modulation circuits that are set to modulate a laser beam emitted from a common laser light source, combine the modulated beams, and externally output the combined beam,
the data signal synchronization setting processing function includes a drive signal transmission processing function that converts the transmission data signals that are externally input into voltage pulses for the corresponding optical phase modulation circuit at the timing of the timing clocks, and transmits the voltage pulses to each arm of the corresponding one or the other optical phase modulation circuit as drive signals for optical phase modulation circuits, and these processing functions are achieved by each of the corresponding computers.

(Supplementary note 14) <Claim 1 before correction>

A signal synchronization transmission system comprising one and another transmission processing devices that transmit a plurality of pieces of data in a phase-synchronous manner and one and another synchronization drive units that synchronously control transmission operations of the respective transmission processing devices, wherein
the one and the other synchronization drive units comprise phase interpolation circuits that externally receive reference clocks for setting operation timings of the signal processing devices through a transfer path or one and another paths that are set in advance, and perform phase interpolation processing on the reference clocks to generate synchronization setting clocks, and synchronization setting circuits that receive the synchronization setting clocks as timing clocks and based on the timing clocks, synchronously set timings of data transmission operations of the corresponding signal processing devices through transmission data signals separately input,
the synchronization drive units each transmit, prior to generation of the synchronization setting clock, the reference clock to the other synchronization drive unit through the transfer path as a transfer clock, and
the phase interpolation circuits each include functions of calculating, when generating the synchronization setting clock, an intermediate phase which is a center of a phase difference between the reference clock and the transfer clock transmitted from the other synchronization drive unit to generate the synchronization setting clock based on the intermediate phase.

(Supplementary note 15) <Claim 2 before correction>

The signal synchronization transmission system according to Claim 1, wherein
the one and the other signal processing devices are formed of one and another optical phase modulation circuits that are set to modulate a laser beam emitted from a certain common light source based on the data signals for transmission, then combine the modulated beams, and externally output the combined beam, and
the synchronization setting circuits are operated by being energized by the phase interpolation circuits, and include functions of converting the data signals for transmission into voltage pulses that are drive signals of the optical phase modulation circuits at timings of the timing clocks and transmitting the voltage pulses to each arm of the corresponding one or the other phase interpolation circuit.

(Supplementary note 16) <Claim 7 before correction>

A synchronization drive system for optical modulator comprising one and another synchronization drive units that synchronously control transmission operations of one and another optical phase modulation circuits that transmit a plurality of pieces of data in a phase-synchronous manner, wherein

the one and the other synchronization drive units comprise phase interpolation circuits that externally receive reference clocks for setting operation timings of the optical phase modulation circuits through a transfer path or one and another paths that are set in advance, and perform phase interpolation processing on the reference clocks to generate synchronization setting clocks, and synchronization setting circuits that receive the synchronization setting clocks that are generated as timing clocks and based on the timing clocks, synchronously set timings of data transmission operations in the corresponding optical phase modulation circuits through transmission data signals separately input,

the synchronization drive units each include a function of transmitting, prior to generation of the synchronization setting clock, the reference clock to the other synchronization drive unit through the transfer path set in advance as a transfer clock, and

the phase interpolation circuits each include functions of calculating, when generating the synchronization setting clock, an intermediate phase which is a center of a phase difference between the reference clock and the transfer clock transmitted from the other synchronization drive unit to generate the synchronization setting clock based on the intermediate phase.

Industrial Applicability

The present invention may be applied not only to an optical modulation circuit, but also to all the communication fields that synchronously transmit a plurality of signals.

Reference Signs List

10, 16 OPTICAL COMMUNICATION APPARATUS
12 TRANSMISSION SIGNAL PROCESSING UNIT
14, 15, 82 OPTICAL TRANSMITTER
20 LASER DIODE
22 OPTICAL MODULATOR
26A, 26B OPTICAL PHASE MODULATION CIRCUIT
32A, 32B, 33A, 33B, 84A, 84B SYNCHRONIZATION DRIVE UNIT
34 CLOCK SIGNAL GENERATION CIRCUIT (CLOCK GENERATION CIRCUIT)
36 SWITCH CONTROL CIRCUIT
40, 70 PATH CHANGE-OVER SWITCH (PATH SWITCHING CIRCUIT)
42, 72 PHASE INTERPOLATION CIRCUIT
44, 74 PHASE SYNCHRONIZATION ADJUSTMENT CIRCUIT
60, 76 SYNCHRONIZATION SETTING CIRCUIT
60a, 76a D-TYPE FLIP-FLOP CIRCUIT
62, 64, 78, 80 DRIVER CIRCUIT (DRIVER)
C1, C2 REFERENCE CLOCK
CL11, CL31 TIMING CLOCK
Dr1, Dr2, Dr3, Dr4 MODULATION DRIVE SIGNAL
OUT1 SYNCHRONIZATION SETTING CLOCK
P BRANCH POINT
TL1a ONE PATH (TRANSMISSION LINE)
TL1b THE OTHER PATH (TRANSMISSION LINE)
TL2 TRANSFER PATH
TL2a ONE TRANSFER PATH
TL2b THE OTHER TRANSFER PATH

**Claims**

1. A signal synchronization transmission system comprising:

   one and another transmission processing devices that transmit a plurality of pieces of data in a phase-synchronous manner; and
   one and another synchronization drive means that synchronously control transmission operations of the respective transmission processing devices, wherein
the one and the other synchronization drive means each comprise:

a phase interpolation circuit that externally receives a reference clock for setting an operation timing of the corresponding transmission processing device through corresponding one or another path, and performs phase interpolation processing on the reference clock to generate a synchronization setting clock; and a synchronization setting circuit that receives the synchronization setting clock as a timing clock, and based on the timing clock, synchronously sets a timing of a data transmission operation of the corresponding signal processing device through a transmission data signal separately input,

the synchronization drive means each transmit, prior to generation of the synchronization setting clock, the reference clock to the other synchronization drive means as a transfer clock through a transfer path, and the phase interpolation circuits each include functions of calculating, when generating the synchronization setting clock, an intermediate phase which is a center of a phase difference between the reference clock and the transfer clock transmitted from the other synchronization drive means and generating the synchronization setting clock based on the intermediate phase.

2. The signal synchronization transmission system according to Claim 1, wherein
the one and the other transmission processing devices comprise one and another optical phase modulation circuits, respectively, the transmission processing devices each being set to modulate a constant laser beam from a common light source based on the data signal for transmission to combine and externally output the modulated laser beams, and
the synchronization setting circuits are each operated at a timing of the timing clock output from the phase interpolation circuit, and include functions of converting the data signal for transmission into a voltage pulse that is a drive signal for the optical phase modulation circuit and transmitting the voltage pulse to each arm of the corresponding one or the other phase interpolation circuit.

3. The signal synchronization transmission system according to Claim 1, wherein
a phase synchronization adjustment circuit is provided between the phase interpolation circuit and the synchronization setting circuit of each of the synchronization drive means, and
when the timing clocks are specified, the phase synchronization adjustment circuits are each configured to adjust the corresponding reference clock that is externally input so as to be synchronized with the synchronization setting clock of the intermediate phase output from the phase interpolation circuit, and to transmit the reference clock whose phase is adjusted to the corresponding synchronization setting circuit as the timing clock.

4. The signal synchronization transmission system according to Claim 1, wherein the synchronization drive means include change-over switches that alternately transmit, as a transfer clock, the reference clock received by the correspoding synchronization drive means to the phase interpolation circuit of another synchronization drive means through the transfer path.

5. The signal synchronization transmission system according to Claim 4, wherein
the change-over switches communicate with each other between the respective synchronization drive means through the transfer path, and are wired so as to be able to synchronously perform a switching operation, and
the signal synchronization transmission system includes switch control means that simultaneously controls switch of operations of the respective change-over switches at the same timing.

6. The signal synchronization transmission system according to Claim 2, wherein each of the synchronization setting circuits includes a D-type flip-flop that operates in accordance with the timing clock, and converts the transmission data signal externally input into voltage pulses corresponding to an optical phase 0 and an optical phase $\pi$ to output the voltage pulses, and two drivers that apply the voltage pulses to each arm of the corresponding one optical phase modulation circuit.

7. A synchronization drive system for optical modulator comprising:

one and another synchronization drive means that synchronously control transmission operations of one and another optical phase modulation circuits that transmit a plurality of pieces of data in a phase-synchronous manner, wherein
the one and the other synchronization drive means each comprise:

a phase interpolation circuit that externally receives a reference clock for setting an operation timing of the corresponding optical phase modulation circuit through corresponding one or another path, and performs phase interpolation processing on the reference clock to generate a synchronization setting clock; and
a synchronization setting circuit that receives the synchronization setting clock that is generated as a timing clock and based on the timing clock, synchronously sets a timing of a data transmission operation in the corresponding optical phase modulation circuit through a transmission data signal separately input,

the synchronization drive means each include a function of transmitting, prior to generation of the synchronization setting clock, the reference clock to the other synchronization drive means as a transfer clock through a transfer path that is set in advance, and
the phase interpolation circuits each include functions of calculating, when generating the synchronization setting clock, an intermediate phase which is a center of a phase difference between the reference clock and the transfer clock transmitted from the other synchronization drive means and generating the synchronization setting clock based on the intermediate phase.

8. A signal synchronization transmission method of a signal synchronization transmission system comprising:

externally receiving, by one and another synchronization drive means each of which synchronously controls a transmission operation of corresponding one or another transmission processing device that transmits a plurality of pieces of data in a phase-synchronous manner, a reference clock for setting a operation timing of the corresponding transmission processing device through corresponding one or another path that is set in advance;
performing phase interpolation processing, by each of the phase interpolation circuits included in the respective synchronization drive means, on the reference clock that is input, to generate a synchronization setting clock;
receiving the synchronization setting clock that is generated as a timing clock and based on the timing clock, synchronously setting a timing of a data transmission operation of the corresponding transmission processing device, and when synchronously setting the timing, transmitting a transmission data signal that is externally input to the corresponding transmission processing device as a device drive signal at a timing of the transmission operation, these operation procedures being executed by the corresponding synchronization setting circuit of the synchronization drive means;
prior to generation of the synchronization setting clock generated by the phase interpolation circuit, executing, by each of the synchronization drive means, transfer of the reference clock to mutually transmit, as a transfer clock, the reference clock received by the synchronization drive means to the other synchronization drive means through a transfer path that is set in advance; and
in the phase interpolation processing executed when the synchronization setting clock is generated, calculating, by each of the phase interpolation circuits, an intermediate phase which is a center of a phase difference between the reference clock and the transfer clock transmitted from the other synchronization drive means, and generating, by each of the phase interpolation circuits, the synchronization setting clock based on the intermediate phase.

9. The signal synchronization transmission method according to Claim 8, comprising:

setting the one and the other transmission processing devices as one and another optical phase modulation circuits, respectively, each of the optical phase modulation circuits being set to modulate a laser beam emitted from a common laser light source to combine modulated beams and externally output a combined laser beam, and when data signals that are modulation drive signals for the one or the other optical phase modulation circuits are synchronously set,
executing, by each of the synchronization setting circuits, an operation of being operated at a timing of the timing clock output from the corresponding phase interpolation circuit in the synchronization drive means, converting the transmission data signal that is externally input into a voltage pulse for a corresponding optical modulation circuit, and then transmitting the voltage pulse to each arm of the corresponding one or the other optical modulator.

10. A non-transitory computer readable medium comprising:

a reference clock input processing function that externally receives a reference clock for setting an operation timing of one and another transmission processing devices each of which transmits a plurality of pieces of data in a phase-synchronous manner for the corresponding transmission processing device through corresponding one or another path that is set in advance, to hold the reference clock by corresponding one or another synchronization drive means that synchronously controls a transmission operation of the corresponding transmission processing device;

a synchronization setting clock generation processing function that performs phase interpolation processing on the reference clock that is input, generates a synchronization setting clock for the corresponding transmission processing device for the corresponding transmission processing device, and holds the synchronization setting clock by the corresponding one or the other synchronization drive means; and

a data signal synchronization setting processing function that specifies each of the synchronization setting clocks generated as a timing clock, and based on the timing clock, synchronously sets a timing of a data transmission operation of the corresponding transmission processing device and separately transmits a transmission data signal that is separately input to the corresponding transmission processing device as a device drive signal at a timing of the data transmission operation, wherein

the timing clock generation processing function further includes a reference clock transfer processing function that mutually transmits, as a transfer clock, the reference clocks separately received in advance through the one and the other paths to the other transmission processing device through a transfer path that is set in advance,

the synchronization setting clock generation processing function includes calculating, in the phase interpolation processing performed when the synchronization setting clock generation processing function is performed, an intermediate phase which is a center of a phase difference between the reference clock and the transfer clock transmitted from the other transmission processing device, and generating the synchronization setting clock based on the intermediate phase, and

these processing functions are achieved by computers included in the one and the other synchronization drive means.

Fig. 1

EP 2 709 293 A1

Fig. 2

Fig. 3

EP 2 709 293 A1

Fig. 4

Fig. 5

EP 2 709 293 A1

Fig. 6

```
                    ┌──────────────┐
                    │    START     │
                    └──────┬───────┘
                           │                          S101
              ┌────────────▼────────────────┐
              │ REFERENCE CLOCK GENERATOR IS ON │
              └────────────┬────────────────┘
                           │                          S102
        ┌──────────────────▼──────────────────────┐
        │ REFERENCE CLOCKS C1 AND C2 ARE INPUT     │
        └──────────────────┬──────────────────────┘
                           │                          S103
        ┌──────────────────▼──────────────────────┐
        │ REFERENCE CLOCK C2 IS TRANSMITTED        │
        └──────────────────┬──────────────────────┘
                           │                          S104
        ┌──────────────────▼──────────────────────┐
        │ SYNCHRONIZATION SETTING CLOCK IS GENERATED │
        └──────────────────┬──────────────────────┘
                           │                          S105
        ┌──────────────────▼──────────────────────┐
        │ SYNCHRONIZE PHASE OF REFERENCE CLOCK C1 WITH │
        │ PHASE OF SYNCHRONIZATION SETTING CLOCK OUT1a │
        └──────────────────┬──────────────────────┘
                           │
                  YES   ┌──▼──────────┐    S106
              ◄─────────┤  IS THERE   │
                        │ PHASE DIFFERENCE
                        │      ?      │
                        └──┬──────────┘
                        NO │                           S107
        ┌──────────────────▼──────────────────────┐
        │ TIMING CLOCK CL11 IS OUTPUT TO           │
        │ D-TYPE FLOP-FLOP CIRCUIT 60A             │
        └──────────────────┬──────────────────────┘
                           │                          S108
        ┌──────────────────▼──────────────────────┐
        │ DRIVE SIGNALS Dr1 AND Dr2 ARE GENERATED  │
        └──────────────────┬──────────────────────┘
                           │
                        ┌──▼──┐
                        │  B  │
                        └─────┘
```

Fig. 7

B

S109

REFERENCE CLOCK C1 IS TRANSMITTED

S110

SYNCHRONIZATION SETTING CLOCK IS GENERATED

S111

SYNCHRONIZE PHASE OF REFERENCE CLOCK C2 WITH
PHASE OF SYNCHRONIZATION SETTING CLOCK OUT1b

YES

IS THERE
PHASE DIFFERENCE
?

S112

NO

S113

TIMING CLOCK CL31 IS OUTPUT TO D-TYPE FLIP-FLOP CIRCUIT 76A

S114

DRIVE SIGNALS Dr3 AND Dr4 ARE GENERATED

END

Fig. 8

Fig. 9

EP 2 709 293 A1

Fig. 10

**INTERNATIONAL SEARCH REPORT**

| International application No. |
| --- |
| PCT/JP2012/002440 |

A.  CLASSIFICATION OF SUBJECT MATTER
*H04B10/04*(2006.01)i, *G02F1/03*(2006.01)i, *G02F1/035*(2006.01)i, *H04B10/06*
(2006.01)i, *H04B10/14*(2006.01)i, *H04B10/142*(2006.01)i, *H04B10/152*
(2006.01)i, *H04B10/26*(2006.01)i, *H04B10/28*(2006.01)i
According to International Patent Classification (IPC) or to both national classification and IPC

B.  FIELDS SEARCHED

Minimum documentation searched (classification system followed by classification symbols)
H04B10/04, G02F1/03, G02F1/035, H04B10/06, H04B10/14, H04B10/142,
H04B10/152, H04B10/26, H04B10/28

Documentation searched other than minimum documentation to the extent that such documents are included in the fields searched
Jitsuyo Shinan Koho        1922–1996   Jitsuyo Shinan Toroku Koho   1996–2012
Kokai Jitsuyo Shinan Koho  1971–2012   Toroku Jitsuyo Shinan Koho   1994–2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | WO 2007/88636 A1  (Fujitsu Ltd.),<br>09 August 2007 (09.08.2007),<br>fig. 15, 18, 19<br>& US 2008/0297270 A1 | 1–10 |
| A | JP 2002-23124 A  (Fujitsu Ltd.),<br>23 January 2002 (23.01.2002),<br>fig. 1, 3, 8<br>& US 2002/0005975 A1    & GB 2364790 A<br>& FR 2811776 A | 1–10 |

☐  Further documents are listed in the continuation of Box C.    ☐  See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 April, 2012 (25.04.12) | Date of mailing of the international search report<br>15 May, 2012 (15.05.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004516743 W
- JP 2010166476 A
- WO 2007088636 A
- JP 2011108173 A